# Europäisches Patentamt

(19) **European Patent Office**

**Office européen des brevets**

(11) Veröffentlichungsnummer: **0 183 072**

**B1**

(12) # EUROPÄISCHE PATENTSCHRIFT

(45) Veröffentlichungstag der Patentschrift:
27.12.89

(51) Int. Cl.⁴: **G 01 N 13/04**, G 01 N 7/10

(21) Anmeldenummer: **85113779.4**

(22) Anmeldetag: **29.10.85**

(54) **Verfahren und Vorrichtung zur Bestimmung des Gehaltes an in einem Lösungsmittel gelösten Stoffen.**

(30) Priorität: **31.10.84 DE 3439765**
**18.07.85 DE 3525668**

(43) Veröffentlichungstag der Anmeldung:
**04.06.86 Patentblatt 86/23**

(45) Bekanntmachung des Hinweises auf die Patenterteilung:
**27.12.89 Patentblatt 89/52**

(84) Benannte Vertragsstaaten:
**BE CH DE FR GB LI NL**

(56) Entgegenhaltungen:
**DE-A-2 163 640**
**DE-U-1 845 192**
**US-A-4 028 931**
**US-A-4 475 556**
**US-A-4 481 806**

(73) Patentinhaber: **Kernforschungsanlage Jülich Gesellschaft mit beschränkter Haftung, Postfach 1913, D-5170 Jülich 1 (DE)**

(72) Erfinder: **Steudle, Ernst, Dr., Jülicher Strasse 28, D-5110 Alsdorf (DE)**
Erfinder: **Zillikens, Josef, Artilleriestrasse 44, D-5170 Jülich (DE)**
Erfinder: **Böling, Gerd, Bonsdorfer Strasse 2, D-5176 Inden- Pier (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1989

EP 0 183 072 B1

## Beschreibung

Die Erfindung bezieht sich auf ein Verfahren zur Bestimmung des Gehaltes an in einem Lösungsmittel gelösten Stoffen mittels einer möglichst starren osmotischen Zelle mit Druckmeßeinrichtung zur Messung des hydrostatischen Druckes in der osmotischen Zelle, wobei die in der osmotischen Zelle befindliche Osmometerlösung über eine Membran mit möglichst hoher Leitfähigkeit für das Lösungsmittel mit der die Stoffe enthaltenden Lösung in Verbindung gebracht wird. Die Erfindung bezieht sich ferner auf einen Meßkopf für eine Einrichtung zur Bestimmung des Gehaltes der Stoffe sowie auf die Einrichtung hierzu.

Ein Verfahren gemäß dem Oberbegriff der Ansprüche 1, 2 und 6 und ein Meßkopf zur Messung des osmotischen Druckes ist aus der US-PS-4 475 556 bekannt. Hierbei handelt es sich um die Messung des koloidosmotischen Druckes (auch als onkotischer Druck bezeichnet) entsprechend dem Druck, bei dem ein Makromolekül oder sonstiges Koloid durch eine geeignete Membran weder Dispersionsmittel anzieht, noch solches von ihm abgepreßt wird. Nach dem bekannten Verfahren soll eine schnelle Messung des Ausgleichsdruckes zweier über die Membran der Osmometerzelle in Verbindung gebrachter Lösungen erfolgen, wobei die Lösungen nicht durch die Membran permeierende Stoffe hohen Molekulargewichts enthalten. Ziel der vorliegenden Erfindung ist dagegen die Bestimmung des Gehaltes an Stoffen in einer Lösung, wenn sich zwei oder mehr Stoffe in der Lösung befinden, wovon einer durch die Membran permeiert. Eine derartige Bestimmung ist schwierig, aufwendig und oft erst nach vorheriger Trennung der Stoffe möglich.

Aus der DE-A-2 163 640 ist es bekannt, bei einem Verfahren zur Konzentrationseinstellung - unter Verwendung einer mit höhermolekularen Stoffen verunreinigten, zu lösen den Substanz - eine semipermeable Membran zu benutzen, die eine Porenweite aufweist, die nur die Permeation des Lösungsmittels und der zu lösenden Substanz gestattet.

Es ist Aufgabe der Erfindung, ein Verfahren zu schaffen, das die Bestimmung des Gehaltes bzw. der Konzentration an Stoffen in einer Lösung auf einfache und schnelle Weise auch dann ermöglicht, wenn sich mehr als ein Stoff in der Lösung befindet. Es ist ferner Aufgabe der Erfindung, eine Einrichtung mit Meßkopf zur Durchführung des Verfahrens und einen Meßkopf hierzu zu schaffen.

Diese Aufgabe wird gemäß der Erfindung durch ein im folgenden als Verfahren la bezeichnetes Verfahren gelöst. Dieses besteht darin, daß eine Membran verwendet wird, die ein derartiges Rückhaltevermögen für die Stoffe aufweist, daß einer der zu untersuchenden Stoffe in Bezug auf die Membran permeierend und mindestens einer nichtpermeierend ist, und daß zunächst unter Verwendung einer geeigneten, mit der Osmometerlösung über die Membran in Verbindung gebrachten Lösung sowie einer geeigneten Osmometerlösung ein Arbeitsdruck $P_0$ eingestellt und ermittelt wird, worauf die mit der Osmometerlösung über die Membran in Verbindung gebrachte Lösung hinreichend schnell durch die die Stoffe enthaltende Lösung ausgetauscht wird, worauf der sich in der osmotischen Zelle einstellende Minimaldruck $P_{min}$ sowie nach darauffolgendem Druckanstieg der sich in der osmotischen Zelle einstellende Enddruck $P_E$ ermittelt werden, wobei sich nach vorheriger Eichung mit Lösungen vorgegebener Konzentration aus der Differenz $P_0 - P_E$ der Gehalt des oder der nichtpermeierenden Stoffe in der zu untersuchenden Lösung und aus der Differenz $P_E - P_{min}$ der Gehalt des permeierenden Stoffes in der Lösung ergibt.

Bei der Eichung ist bei der Bestimmung der permeierenden Komponente darauf zu achten, daß die Eichlösungen den nichtpermeierenden Stoff in etwa der gleichen Konzentration enthalten wie die zu untersuchende Lösung. Deren Konzentration an permeierendem Stoff ergibt sich dann aus dem Graphen $(P_E - P_{min}) = f(C^{\circ}_s)$ und die Konzentration an nicht premeierenden Stoffen aus dem Graphen $(P_0 - P_E) = g(C^{\circ}_{imp})$ ergeben. $(P_0 - P_E) = g(C^{\circ}_{imp})$ stellt in jedem Fall eine Gerade dar, während $(P_E - P_{min}) = f(C^{\circ}_s)$ von der Geradenform abweichen kann, da $t_{min}$ vom Mischungsverhältnis $\sigma_s \cdot C^{\circ}_s/C^{\circ}_{imp}$ abhängt.

Die Aufgabe wird gemäß der Erfindung alternativ durch ein im folgenden als Verfahren Ib bezeichnetes Verfahren gelöst. Dieses besteht darin, daß eine Membran verwendet wird, die ein derartiges Rückhaltevermögen für die Stoffe aufweist, daß einer der zu untersuchenden Stoffe in Bezug auf die Membran permeierend und mindestens einer nichtpermeierend ist, und daß zunächst unter Verwendung einer geeigneten, mit der Osmometerlösung über die Membran in Verbindung gebrachten Lösung sowie einer geeigneten Osmometerlösung ein Arbeitsdruck $P_0$ eingestellt und ermittelt wird, worauf die mit der Osmometerlösung über die Membran in Verbindung gebrachte Lösung hinreichend schnell durch die die Stoffe enthaltende Lösung ausgetauscht wird, worauf der sich in der osmotischen Zelle einstellende Minimaldruck $P_{min}$, die Zeit $t_{min}$, innerhalb der sich nach Austausch der beiden Lösungen der Minimaldruck $P_{min}$ einstellt, die Geschwindigkeitskonstante $k_s$ für den nach dem Minimaldruck erfolgenden exponentiellen Druckanstieg und der nach dem Druckanstieg sich einstellende Enddruck $P_E$ ermittelt werden, wonach sich der Gehalt $C^{\circ}_s$ des permeierenden Stoffes s aus der Beziehung

$$P_E - P_{min} = \sigma_s \cdot RT \cdot C^{\circ}_s \cdot \exp(-k_s \cdot t_{min}) \tag{1}$$

mit $R = 8,31434$ J/°K mol,
$T =$ absolute Temperatur
und $\sigma_s =$ Reflektionskoeffizient von s

und sich der Gehalt $C^{\circ}_{imp}$ des oder der nichtpermeierenden Stoffe der Beziehung

$$P_O - P_E = RT \cdot C^\circ_{imp} \tag{2}$$

ergeben.

Gemäß der durch die Erfindung gegebenen Lehre ist eine möglichst starre osmotische Zelle zu verwenden, d.h. eine osmotische Zelle mit starrer Wandung und starrer Membran, so daß während der Durchführung des Verfahrens die Änderung des Volumens der osmotischen Zelle vernachlässigbar klein ist. Für diesen Fall gelten die Beziehungen 1 und 2.

Für den Fall jedoch, daß die Membran und die osmotische Zelle nicht hinreichend starr und die bei der Durchführung der Bestimmung auftretenden Änderungen des Volumens der osmotischen Zelle nicht vernachlässigbar sind, wird der Volumenelastizitätsmodul $\varepsilon$ ( $\varepsilon = \Delta P/\Delta V$) mittels einer hierfür geeigneten Einrichtung ermittelt, wonach sich der Gehalt $C^\circ_s$ des permeierenden Stoffes aus der Beziehung

$$P_E - P_{min} = \frac{\varepsilon}{\varepsilon + RT \cdot C^i_{imp}} \cdot \sigma_s \cdot RT \cdot C^\circ_s \cdot \exp(-k_s \cdot t_{min}) \tag{3}$$

mit $C^i_{imp}$ = Konzentration der Osmometerlösung und sich der Gehalt $C^\circ_{imp}$ des Stoffes aus der Beziehung

$$P_O - P_E = \frac{\varepsilon}{\varepsilon + RT \cdot C^i_{imp}} RT \cdot C^\circ_{imp} \tag{4}$$

ergeben.

Die bei den Verfahrensweisen Ia und Ib zu verwendende Membran soll eine möglichst hohe Leitfähigkeit für das Lösungsmittel und ein hinreichend großes Rückhaltevermögen für die Stoffe aufweisen. Das Rückhaltevermögen der Membran ist für die Stoffe dann hinreichend groß, wenn der Austausch des permeierenden Stoffes durch die Membran gegenüber dem Austausch des reinen Lösungsmittels über die Membran hinweg derart verzögert ist, daß während der Austauschphase des reinen Lösungsmittels der Austausch des permeierenden Stoffes nur gering ist und wenn außerdem der Austausch des nichtpermeierenden Stoffes durch die Membran gegenüber dem Austausch des permeierenden Stoffes derart verzögert ist, daß während des Austausches des permeierenden Stoffes kein merkbarer Austausch des nichtpermeierenden Stoffes stattfindet, d.h. wenn die Geschwindigkeitskonstante $k_s$ für den permeierenden Stoff genügend groß ist gegenüber der des nichtpermeierenden Stoffes, wenn also während der Untersuchung der nichtpermeierende Stoff praktisch nicht durch die Membran gelangt. Das bedeutet andererseits, daß bei vorgegebener Membran ein Stoff dann als permeierend im Sinne der durch die Erfindung gegebenen Lehre anzusehen ist, wenn er während der Durchführung des Verfahrens gegenüber dem reinen Lösungsmittel hinreichend verzögert, gegenüber dem nichtpermeierenden Stoff jedoch hinreichend schnell durch die Membran gelangt. Entsprechend ist ein Stoff im Sinne der durch die Erfindung gegebenen Lehre dann als nichtpermeierend anzusehen, wenn er während der Durchführung des Verfahrens praktisch nicht durch die Membran gelangt. Entsprechend kann in diesem Sinne auch ein Stoff praktisch nichtpermeierend sein, obwohl der Reflektionskoeffizient $\sigma_s < 1$ ist, wenn seine Permeabilität (d.h. $k_s^i$) in der Membran hinreichend klein ist.

Gemäß der durch die Erfindung gegebenen Lehre werden zur Einstellung des Arbeitsdruckes $P_O$ in der osmotischen Zelle eine geeignete Osmometerlösung eingefüllt und eine geeignete Lösung mit der osmotischen Zelle über die Membran in Verbindung gebracht. Als außerhalb der osmotischen Zelle zu verwendende Lösung ist beispielsweise das reine Lösungsmittel (z. B. Wasser) geeignet. Eine geeignete Osmometerlösung ist dagegen eine Lösung, in der sich ein nichtpermeierender Stoff befindet, so daß sich infolge der osmotischen Druckdifferenz über der Membran in der osmotischen Zelle der hydrostatische Arbeitsdruck $P_O$ aufbaut. Dabei ist die Konzentration des nichtpermeierenden Stoffes in der Osmometerlösung zweckmäßigerweise so zu wählen, d.h. ein solcher Arbeitsdruck $P_O$ einzustellen, daß sich bei der anschließenden Bestimmung der Stoffe gut meßbare Differenzdrücke $(P_O - P_E)$ bzw. $(P_E - P_{min})$ ergeben.

Nach der Ermittlung des Arbeitsdruckes $P_O$ in der osmotischen Zelle wird die mit der osmotischen Lösung über die Membran in Verbindung gebrachte Lösung, beispielsweise das reine Lösungsmittel, durch die die zu bestimmenden Stoffe enthaltende Lösung hinreichend schnell ausgetauscht, worauf sich der Minimaldruck $P_{min}$ einstellt. Da dieser Minimaldruck durch die Konzentration (den Gehalt) des permeierenden Stoffes in der Lösung (der sich aus $P_E - P_{min}$ ergibt) bestimmt ist, muß der Austauschvorgang der beiden Lösungen sehr schnell verlaufen gegenüber der Halbwertzeit für den Fluß des reinen Lösungsmittels durch die Membran, die im Bereich von Sekunden liegen kann.

Bei der Durchführung der alternativen Verfahrensweise Ib gemäß der Erfindung sind gegenüber der ersten Verfahrensweise Ia zusätzlich die Zeit $t_{min}$ von Beginn des Austauschvorganges der beiden Lösungen (Lösungsmittel und zu untersuchende Lösung) bis zur Einstellung des Minimaldruckes $P_{min}$ sowie die Geschwindigkeitskonstante $k_s$ für den nach dem Minimaldruck erfolgenden Druckanstieg zu ermitteln, der eine Folge der Permeation des permeierenden Stoffes durch die Membran ist. Vor der Durchführung der Verfahrensweise Ib ist außerdem noch der Reflektionskoeffizient $\sigma_s$, der bei gegebener Membran und bei gegebenem Lösungsmittel eine Stoffkonstante ist, zu bestimmen. Dies geschieht unter Verwendung von Eichlösungen nach der in Steudle, E. und S.D. Tyerman (1983) Determination of permeability coefficients, reflection coefficients and hydraulic conductivity of *Chara corallina* using the pressure probe: Effects of solute concentration. J. Membrane Biol. 75, 85 - 96, angegebenen Verfahrensweise. Hiernach wird die osmotische Zelle zunächst mit dem reinen Lösungsmittel in Verbindung gebracht, wobei sich der Arbeitsdruck $P_O$ einstellt. Darauf wird eine Lösung appliziert, die nur den permeierenden Stoff in bekannter Konzentration enthält. Aus dem Druckunterschied ($P_O$ - $P_{min}$) ergibt sich $\sigma_s$ nach einer Korrektur für den Fluß der permeierenden Substanz.

Für den Fall, daß in der zu untersuchenden Lösung nur je ein nichtpermeierender und ein permeierender Stoff gelöst sind, läßt sich bei Anwendung der Verfahren Ia und Ib gemäß der Erfindung jeweils der absolute Gehalt an diesen Stoffen entweder unter Benutzung von Eichwerten bestimmen oder nach den angegebenen Beziehungen errechnen.

Für den Fall, daß ein einziger permeierender Stoff, aber mehr als ein nichtpermeierender Stoff in der Lösung vorhanden sind, wird der Gehalt des permeierenden Stoffes und der Gesamtgehalt (Gesamtkonzentration) der nichtpermeierenden Stoffe bestimmt. Sind neben dem oder den nichtpermeierenden Stoffen mehrere permeierende Stoffe in der Lösung, so hat dies keinen Einfluß auf die Bestimmung des (Gesamt-)Gehaltes des oder der nichtpermeierenden Stoffe aus der Differenz $P_O$ - $P_E$.

Die angegebenen Verfahrensweisen gemäß der Erfindung sind somit auf Lösungen mit sehr unterschiedlichen, darin gelösten Stoffen anwendbar. Dabei kann durch Wahl einer geeigneten Membran erreicht werden, daß bestimmte Stoffe in der Lösung als permeierende, andere als nichtpermeierende im Sinne der durch die Erfindung gegebenen Lehre anzusehen sind. Eine besondere Ausführungsvariante der Verfahrensweisen Ia und Ib besteht darin, daß die Geschwindigkeitskonstante $k_s$ für den nach dem Minimaldruck erfolgenden exponentiellen Druckanstieg und die zeitliche Änderung

$$\frac{(d^2P)}{dt^2} \text{ min}$$

der Steigung im Druckminimum ermittelt werden und daß aus der Beziehung

$$k_s \cdot k_W = \frac{1}{P_E - P_{min}} \; (\frac{d^2P}{dt^2})_{min} \tag{4a}$$

der Enddruck $P_E$ errechnet wird, wobei zuvor für die verwendete osmotische Zelle die Geschwindigkeitskonstante $k_W$ für die Druckänderung bis zum Minimum ermittelt worden ist.

Die Geschwindigkeitskonstante $k_W$ beschreibt den Wasseraustausch durch die Membran. Wenn die Permeation der Stoffe (außer der des Wassers) in diesem ersten Teil der Druckkurve vernachlässigbar ist, kann $k_W$ unter Verwendung einer Lösung, die einen nichtpermeierenden Stoff enthält, gemessen werden. Anderenfalls muß $k_W$ gesondert bestimmt werden.

Bei Durchführung der genannten Ausführungsvarianten zu Ia und Ib kann

$$(\frac{d^2P}{dt^2})_{min}$$

graphisch oder durch Kurvenfit mittels eines Rechners bestimmt werden, wobei der zweiten Möglichkeit wegen der schnelleren Durchführbarkeit der Vorzug zu geben ist.

Bei einer weiteren Ausgestaltung der genannten Ausführungsvarianten wird die Geschwindigkeitskonstante $k_s$ für die zu untersuchende, die Stoffe enthaltende Lösung vorab bestimmt. Bei nachfolgender Durchführung der Ausführungsvarianten wird der einmal bestimmte Wert für $k_s$ (ebenfalls wie der für $k_W$) lediglich zur Berechnung von $P_E$ in die Bestimmung (4a) eingesetzt. Dies hat den Vorteil, daß die Bestimmung der Gehalte in kürzerer Zeit erfolgen kann, da hierzu nur der Verlauf der Druckkurve bis zum Ende des für die Bestimmung von

$$(\frac{d^2P}{dt^2})_{min}$$

benötigten Bereiches um das Minimum herangezogen werden muß. Dies kann zu erheblich kürzeren Meßzeiten führen, da gerade der nach dem Minimum erfolgende exponentielle Anstieg der Druckkurve der relativ längste Teil der Druckkurve ist.

Die der Erfindung zugrundeliegende Aufgabe wird ferner alternativ durch das im folgenden als Verfahren II bezeichnete Verfahren, das aus den Verfahrensvarianten IIa und IIb besteht, gelöst. Dieses Verfahren besteht darin, daß eine Membran mit möglichst großem Rückhaltevermögen für die Stoffe verwendet wird, und daß zunächst unter Verwendung einer geeigneten, mit der Osmometerlösung über die Membran in Verbindung gebrachten Lösung sowie einer geeigneten Osmometerlösung ein Arbeitsdruck $P_O$ eingestellt wird, worauf für den Fall, daß die zu untersuchende Lösung zwei Stoffe enthält, nach Austausch der mit der Osmometerlösung über die Membran in Verbindung gebrachten Lösung durch die die beiden Stoffe enthaltende Lösung aus dem aufgrund dieses Austauschs erfolgenden Druckabfall in der osmotischen Zelle die Anfangsneigung

$$\left( \frac{dP}{dt} \right)_{t=0}$$

der Druck/Zeit-Kurve und mit dieser Meßgröße nach vorheriger Eichung mit Lösungen vorgegebener Konzentration oder aus der Beziehung

$$\left( \frac{dP}{dt} \right)t = O = -\frac{A_o}{V_o} \cdot Lp \cdot \varepsilon \cdot RT(\sigma_1 \cdot C_1 + \sigma_2 \cdot C_2) \tag{5}$$

der Ergebniswert

$$X_1 = \sigma_1 \cdot C_1 + \sigma_2 \, C_2 \tag{6}$$

ermittelt werden, wobei

$A_o$     die effektive Oberfläche der Membran,
$V_o$     das Volumen der osmotischen Zelle,
$Lp$     die hydraulische Leitfähigkeit der Membran,
$\sigma$     der Volumenelastizitätsmodul der osmotischen Zelle
$R$     $= 8,31434 \, J/^\circ K$ mol,
$T$     absolute Temperatur,
$\sigma_1$     der Reflektionskoeffizient des Stoffes 1,
$C_1$     der Gehalt des Stoffes 1,
$\sigma_2$     der Reflektionskoeffizient des Stoffes 2 und
$C_2$     der Gehalt des Stoffes 2 ist, und daß parallel zur Ermittlung des Ergebnis wertes $X_1$ entweder nach dem beschriebenen Verfahren eine weitere Messung mittels einer zweiten osmotischen Zelle mit einer Membran mit anderem Rückhaltvermögen für die Stoffe erfolgt (Verfahren IIa), wobei ein weiterer Ergebniswert

$$X_2 = \sigma'_1 \cdot C_1 + \sigma'_2 \cdot C_2 \tag{7}$$

ermittelt wird, und anschließend mittels der beiden ermittelten Ergebniswerten $X_1$ und $X_2$ die Gehalte der beiden Stoffe errechnet werden,

oder daß die weitere Messung mittels der zweiten osmotischen Zelle nach einem der Verfahren Ia oder Ib durchgeführt wird, wobei eine Membran mit einem solchen Rückhaltevermögen für die Stoffe verwendet wird, daß hinsichtlich der der verwendeten Membran der eine Stoff permeierend und der andere Stoff nichtpermeierend ist und wobei es hinreicht, daß nur der Gehalt des permeierenden oder der Gehalt des nichtpermeierenden Stoffes ermittelt wird, und unter Verwendung des Ergebniswertes $X_1$ die Gehalte beider Stoffe errechnet werden (Verfahren IIb)

Für die Durchführung der Verfahrensvariante IIa, nach der der Ergebniswert $X_1$ und parallel hierzu der Ergebniswert $X_2$ bestimmt werden, ist zu gewährleisten, daß die Zeitkonstanten der osmotischen Zellen ausreichend klein sind gegenüber der Zeitkonstante des zu beobachtenden Prozesses. Das ist dann der Fall, wenn die K-Werte der osmotischen Zellen:

$$K = \frac{A_o}{V_o} \cdot Lp \cdot \varepsilon \cdot RT \tag{8}$$

hinreichend groß sind. Dies kann, da es sich bei den Faktoren

$\dfrac{A_o}{V_o}$, $Lp$ und $\varepsilon$ um konstruktionsspezifische Größen

einer osmotischen Zelle bzw. deren Membran handelt, durch die Wahl geeigneter osmotischer Zellen geschehen. Andererseits soll der lineare Verlauf der Druck/Zeit-Kurve, der sich infolge einer Konzentrationsänderung einstellt, verglichen mit der Dauer der Mischphase, die sich beim Austausch zweier Lösungen im Meßsystem einstellt, hinreichend lang sein.

Die Reflektionskoeffizienten $\sigma_1$ und $\sigma_2$ sind vorab zu bestimmen. Zur Bestimmung von $\sigma_1$ bzw. $\sigma_2$ vergleicht man die Anfangsneigung, die der Stoff 1 bzw. 2 bekannter Konzentration bewirkt mit derjenigen, die bei Zugabe eines nichtpermeierenden Stoffes (in bekannter Konzentration) erhalten wird.

Bei der Verfahrensvariante IIa sind die Membranen der beiden osmotischen Zellen so zu wählen, daß sich die Werte für $\sigma_1$ und $\sigma_1'$ bzw. $\sigma_2$ und $\sigma_2'$ hinreichend unterscheiden.

Die für eine vorgegebene osmotische Zelle konstante Größe K wird zweckmäßigerweise durch Eichung bestimmt.

Die beim Austausch von Lösungen in einem Behälter oder in einer Rohrleitung eintretende kurzzeitige Vermischung der Lösungen kann dazu führen daß der anfängliche Druckabfall in der osmotischen Zelle ungenau definiert ist. Erst dann, wenn die Lösungen vollständig ausgetauscht sind, wird sich der lineare Verlauf der Druck/Zeit-Kurve einstellen, aus dem dann bei der Durchführung es Verfahrens II die Anfangsneigung bestimmt wird.

Sieht man von der Ausführungsvariante zu den Verfahrensweisen Ia und Ib einmal ab, so ermöglicht Verfahrensvariante IIa eine schnellere Bestimmung der Gehalte der beiden Stoffe als die Verfahren Ia und Ib, da bei letzteren der Verlauf der gesamten Druckkurve bis zum Erreichen des Endwertes $P_E$ abgewartet werden muß. Dafür werden allerdings bei der Durchführung des Verfahrens IIa (wie auch bei dem Verfahren IIb) zwei osmotische Zellen, bei der Durchführung der Verfahren Ia oder Ib dagegen nur je eine einzige osmotische Zelle benötigt.

Auch nach dem Verfahren IIb, bei dem die Parallelmessung über die Bestimmung der Druckdifferenz ($P_E - P_{min}$) bzw. $P_0 - P_E$) erfolgt, ist eine schnellere Bestimmung des Gehaltes eines Stoffes für den Fall möglich, daß der Gehalt eines der Stoffe konstant ist und nur der Gehalt des anderen Stoffes gemessen werden soll.

Darüberhinaus kann nach den Verfahrensweisen IIa und II b der Zeitpunkt bestimmt werden, in dem beispielsweise an der Meßstelle einer Rohrleitung, in der zunächst Wasser fließt, eine zwei Stoffe enthaltende Lösung ankommt. Hierbei genügt dann ggf. die Bestimmung des Summenwertes $X_1$ (oder $X_2$) zur Ermittlung des Zeitpunktes.

Selbstverständlich kann, wenn es nicht in erster Linie auf die Bestimmung des Gehaltes der Stoffe sondern auf die Bestimmung des Zeitpunktes einer Konzentrationsänderung in einer in einem Behälter oder einem Rohr befindlichen Lösung ankommt, nach dem Verfahren II ohne Parallelmessung vorgegangen werden, d.h., es wird mittels nur einer osmotischen Zelle der Druckabfall in der osmotischen Zelle festgestellt. Auf diese Weise kann eine osmotische Zelle als Kontroll- oder Warneinrichtung eingesetzt werden.

Die Zeitpunktbestimmung nach Verfahren II ist auch möglich, wenn die Anfangsneigung

$$(\frac{dP}{dt})t = O \text{ nicht linear von den Konzentrationen}$$

abhängt, was im Bereich sehr hoher Konzentration möglich ist und zu einem hyperbolischen Verlauf der Eichkurven führen kann. Eine nichtlineare Abhängigkeit kann vor allem auf eine Konzentrationsabhängigkeit der hydraulischen Leitfähigkeit der Membran ($L_P$) oder auf Effekte ungerührter Schichten hindeuten. Eine Konzentrationsbestimmung nach Verfahren II ist in diesem Falle möglich, indem die zu untersuchende Lösung entsprechend verdünnt wird, so daß der lineare Zusammenhang wieder gegeben ist oder, indem aus ($P_0 - P_E$) zunächst $C^o_{imp}$ errechnet wird und dann eine Eichkurve im zu erwartenden Konzentrationsbereich von $C^o_S$ mit Lösungen erstellt wird, die den nichtpermeierenden Stoff bereits in der richtigen Konzentration enthalten.

Anwendungsfälle für die Bestimmung des Gehaltes von Stoffen sind insbesondere die Bestimmung von niedermolekularen, permeierenden neben höhermolekularen, nichtpermeierenden Stoffen. Ein Anwendungsfall ist beispielsweise die Bestimmung des Gehaltes (permeierendem) Alkohol und an (nichtpermeierendem) Zucker während der alkoholischen Gärung. Eine derartige Bestimmung hat Bedeutung sowohl für die Herstellung alkoholischer Getränke als auch für die Herstellung von Industriealkohol. Die Verfahrensweisen gemäß der Erfindung sind auch anwendbar auf die Bestimmung des menschlichen Blutalkoholgehaltes.

Weitere Anwendungsfälle sind die Gehaltsbestimmung von organischen Lösungsmitteln in wäßrigen Lösungen (z. B. von Ethanol, Methanol, Propanol, Estern, Äther, Azeton u.a.), wie sie bei bestimmten chemischen Verfahren anfallen. Ein anderer Anwendungsbereich in der chemischen Industrie ist die Bestimmung von Lösungsmittelresten, Salzen und anderen Schadstoffen in Abwässern.

Die Verfahrensweisen gemäß der Erfindung sind außerdem einzusetzen zur Überwachung von Dialyseprozessen.

Ein besonderer Anwendungsfall für das Verfahren II (und ggf. der besonderen Ausführungsvarianten der Verfahren Ia und Ib) liegt in der raschen Erkennung eines Lösungswechsels, wie er beispielsweise in einer Brauerei oder in anderen Bereichen der Nahrungsmittelindustrie bei einem Wechsel zwischen Reinigungsmittel (z. B. Leitungswasser) und einem Produkt (z. B. Bier) auftritt.

Durch die schnelle Ermittlung des Zeitpunktes des Lösungswechsels an einer bestimmten Stelle können Verluste an Produkten eng begrenzt werden. Das Verfahren II kann ferner Anwendung finden in Verbindung mit nur einer einzigen osmotischen Zelle als Warnsystem, um beispielsweise Lecks in Tanks, Rohrleitungen usw. aufgrund von rasch auftretenden Konzentrationsänderungen zu erkennen.

Für eine Einrichtung zur Durchführung der Verfahrensweisen gemäß der Erfindung ist ein Meßkopf, im folgenden mit "Meßkopf a" bezeichnet, geeignet, der aus einer osmotischen Zelle mit starrer Membran und starrer Wandung aus Metall oder Kunststoff besteht wobei die Zelle eine Druckmeßeinrichtung zur Messung des hydrostatischen Druckes in der osmotischen Zelle aufweist, und wobei Wandung und Membran die osmotische Zelle nach außen abgrenzen und die Membran einen möglichst hohen Elastizitätsmodul, eine möglichst hohe Leitfähigkeit für das Lösungsmittel besitzt. Die Membran weist erfindungsgemäß ein derartiges Rückhaltevermögen für die in der zu untersuchenden Lösung befindlichen Stoffe auf, daß einer der zu untersuchenden Stoffe in Bezug auf die Membran permeierend und mindestens einer nichtpermeierend ist und daß das Verhältnis des Volumens der osmotischen Zelle zur effektiven Oberfläche der Membran höchstens 0,2 mm beträgt.

Der Meßkopf a kann zur Durchführung des Verfahrens gemäß der Erfindung beispielsweise an oder in einem Behälter oder an oder in einer Rohrleitung (auch bypass-Leitung) mit der Membran dem Innenraum zugekehrt, angeordnet sein, in die alternierend die zu untersuchende Lösung (oder eine verdünnte Teillösung hiervon) und die Lösung zur Einstellung des Arbeitsdruckes $P_0$ in dem für die Untersuchung benötigten zeitlichen Abstand eingefüllt werden.

Zur Durchführung der Verfahrensweise gemäß der Erfindung ist ferner ein Meßkopf, im folgenden mit "Meßkopf b" bezeichnet, für eine Einrichtung zur Bestimmung des Gehaltes an in einem Lösungsmittel gelösten Stoffen geeignet. Der Meßkopf b besteht aus einer osmotischen Zelle mit starrer Wandung aus Metall oder Kunststoff, mit einer Starren Membran mit möglichst hoher Leitfähigkeit für das Lösungsmittel und möglichst hohem Elastizitätsmodul, und mit einer Druckmeßeinrichtung zur Messung des hydrostatischen Druckes in der osmotischen Zelle und einem Behälter, der mit der osmotischen Zelle derart in Verbindung steht, daß sein Innenraum an die Membran der osmotischen Zelle angrenzt. Erfindungsgemäß weist die Membran ein derartiges Rückhaltevermögen für die in der zu untersuchenden Lösung befindlichen Stoffe auf, daß einer der zu untersuchenden Stoffe in Bezug auf die Membran permeierend und mindestens einer nichtpermeierend ist. Das Verhältnis des Volumens der osmotischen Zelle zur effektiven Oberfläche der Membran beträgt dabei höchstens 0,2 mm. Der Behälter ist mit Zu- und Ableitung für die Lösung zur Einstellung des Arbeitsdruckes $P_0$, für die zu untersuchende Lösung sowie ggf. für die Eichlösungen versehen, wobei die Zu- und Ableitung sowie der Behälterinnenraum so ausgebildet sind, daß die in ihn eingespeisten Lösungen möglichst schnell austauschbar sind. Die Membran ist zweckmäßigerweise eine Hyperfiltrationsmembran.

Die Membran des Meßkopfes (a, b) gemäß der Erfindung kann eine Hohlfasermembran sein.

Dabei kann der Innenraum der Faser als osmotische Zelle oder, im Falle des Meßkopfes b, auch als Behälter vorgesehen sein. Selbstverständlich können dabei auch Bündel von Hohlfasern Verwendung finden.

Beim Meßkopf b (Meßkopf mit integriertem Behälter) werden die über die Membran mit der Osmometerlösung in Verbindung zu bringenden Lösungen, d.h. die zur Einstellung des Arbeitsdruckes $P_0$ benötigte und die zu untersuchende Lösung sowie ggf. die Eichlösung in den Behälter eingefüllt. Zuleitung und Innenraum des Behälters sind so ausgestaltet, daß der Austausch der Lösungen einerseits möglichst schnell, andererseits aber vollständig erfolgt. Ungerührte Schichten können durch rasches, kontinuierliches Durchströmen mit den Lösungen minimiert werden.

Die osmotische Zelle weist zweckmäßigerweise eine Zu- und eine Ableitung für die Osmometerlösung auf. Das Innenvolumen der osmotischen Zelle soll zweckmäßigerweise so klein wie möglich gehalten werden, da dies erfahrungsgemäß geeignet ist, hohe ε-Werte der Zelle zu erzielen. Andererseits ist eine Rührung (Konvektion) der Osmometerlösung während der Messung wünschenswert, um Effekte durch ungerührte Schichten an der Membranoberfläche zu minimieren. Zu diesem Zweck kann auch eine osmotische Zelle mit einem Rührer vorgesehen sein. Ein Rührwerk sollte jedoch so wenig Raum wie möglich einnehmen. Eine Alternative, bei der man ohne Rührwerk auskommt, besteht darin, die osmotische Zelle so auszubilden, daß ihre Abmessungen in die Größenordnung der zu erwartenden Dicken der ungerührten Schichten kommen.

Für den Fall, daß die Membran nicht hinreichend starr ist, hat es sich als zweckmäßig erwiesen, die Membran durch Metallgitter zu verstärken.

Im Hinblick auf eine generelle Kontrolle des Meßkopfes (a, b) auf Starrheit der osmotischen Zelle, aber auch zur Ermittlung des Elastizitätsmoduls ε der osmotischen Zelle für die Verfahrensweise, bei der die Bestimmungen gemäß Gleichung 3 und 4 zur Anwendung kommen, ist es zweckmäßig, daß eine Einrichtung zur kontrollierten Volumenänderung der osmotischen Zelle vorgesehen ist. Mit einer solchen Einrichtung kann beispielsweise das Volumen der osmotischen Zelle durch Einschieben und Herausfahren eines Regelstabes innerhalb gewisser Grenzen sehr genau variiert und die Volumenänderung mittels eines Mikrometers gemessen werden. Bei geschlossener osmotischer Zelle führt dies zu Druckänderungen, die mittels der Druckeinrichtung erfaßt werden. Bei bekanntem Volumen der osmotischen Zelle kann so die Elastizität der osmotischen Zelle (der Volumenelastizitätsmodul ε,

$$\varepsilon = V \frac{\Delta P}{\Delta V}$$

wobei bestimmt werden.

Bei einer weiteren Ausführungsform des Meßkopfes (a, b) gemäß der Erfindung gibt die Druckmeßeinrichtung elektrische Ausgangssignale ab, die ein Maß für den Gehalt an Stoffen in der zu untersuchenden Lösung sind.

Für den Einsatz des Meßkopfes a, der aus einer osmotischen Zelle ohne zusätzlichem Behälter für die zu untersuchende Lösung besteht, ist eine Einrichtung geeignet, bei der ein Behälter vorgesehen ist, an dem der Meßkopf, an dessen Innenraum mit seiner Membran angrenzend, angebracht ist und der wahlweise mit einer Lösung zur Einstellung des Arbeitsdruckes $P_0$, mit der zu untersuchenden Lösung und gegebenenfalls mit Eich-

EP 0 183 072 B1

lösungen beschickbar ist. Der Behälter kann selbstverständlich auch eine Rohrleitung sein.

Für den Meßkopf b ist eine Einrichtung geeignet, bei der mit der Zuleitung für den Behälter des Meßkopfes Speicherbehälter für die Lösung zur Einstellung des Arbeitsdruckes $P_O$ und gegebenenfalls für die Eichlösung und mit der Zuleitung für die osmotische Zelle ein Speicherbehälter für die Osmometerlösung in Verbindung stehen und bei der ferner ein mit der Zuleitung für den Behälter des Meßkopfes b in Verbindung stehender, die zu untersuchende Lösung enthaltender Aufnahmebehälter oder eine Rohrleitung hierfür vorgesehen ist.

Wird bei der Einrichtung ein Meßkopf (a, b) eingesetzt, dessen Druckmeßeinrichtung elektrische Signale abgibt, so kann der Verlauf der Meßwerte auf einem Schreiber aufgezeichnet werden.

Die Einrichtungen können unabhängig von der Art des Verwendeten Meßkopfes und der Art der angewendeten Verfahrensweise und somit unabhängig davon, ob ein oder zwei Meßköpfe eingesetzt werden, sowohl als Meßgerät mit veränderbarem Standort als auch als Anlagenteil, beispielsweise als Teil einer Anlage zur Durchführung eines bestimmten Prozesses, wie der alkoholischen Gärung, ausgestattet sein. Dabei kann es zweckmäßig sein, daß ein Steuergerät zur Steuerung einer automatischen Betriebs weise der Einrichtung vorgesehen ist, wobei alternierend in Vorbestimmten Zeitabständen die zur Einstellung des Arbeitsdruckes $P_O$ bestimmte Lösung und die zu untersuchende Lösung in den Behälter des Meßkopfes b bzw. in den Behälter, an dem der Meßkopf a angebracht ist eingefüllt werden.

Sind zwei Meßköpfe zur Durchführung der Verfahrens weise II Vorgesehen, so können selbstverständlich auch ein Meßkopf a und ein Meßkopf b zum Einsatz kommen.

Sehr vorteilhaft ist ferner eine Einrichtung, bei der eine weitere Steuer- und/oder Überwachungseinrichtung vorgesehen ist, die die elektrischen Ausgangssignale des Meßkopfes (a, b) oder - bei Anwendung der Verfahrensweise II - der Meßköpfe (a, a oder a, b oder b, b) aufnimmt und die zur Steuerung und/oder Überwachung von Vorgängen dient, die in funktioneller Abhängigkeit vom Gehalt der zu untersuchenden Stoffe stehen. Neben einer Überwachung der Vorgänge können bestimmte Sollwerte der Konzentration (Gehalte) der Stoffe bei derartigen Prozessen elektronisch reguliert werden. Derartige Prozesse sind beispielsweise der Ablauf der alkoholischen Gärung, bei der der Gehalt an Alkohol (permeierend) und der Gehalt an Zucker (nichtpermeierend) eine Aussage über den Stand der Gärung zulassen oder die Überwachung von Lösungsmittelkonzentrationen in Abwässern. Bei Anwendung des Verfahrens gemäß der Erfindung können herkömmliche analytische Konzentrationsbestimmungen entfallen. Die Taktzeit, in der die Messung wiederholt werden kann, hängt im Falle der Anwendung der Verfahren Ia und Ib einerseits von der Untersuchungszeit, die einige Minuten betragen kann, ab, anderseits von den zu überwachenden Vorgängen selbst. Die Untersuchungszeit hängt von den physikalischen Eigenschaften der Membran (Leitfähigkeit für das Lösungsmittel und die gelösten Stoffe) sowie des Meßkopfes (a, b) (Volumen/Oberfläche- Verhältnis der osmotischen Zelle; Volumenelastizitätsmodul) ab und kann somit an das Meßproblem angepaßt werden.

In einer Reihe von Anwendungsfällen ist eine Algenzelle, insbesondere eine Internodialzelle von Characeen als osmotische Zelle bei der Durchführung des Verfahrens gemäß der Erfindung geeignet, wobei der in der Zelle herrschende hydrostatische Druck mittels einer in die Zelle eingeführten Druckmeßsonde gemessen wird. Als Lösung zur Einstellung des Arbeitsdruckes verwendet man dabei zunächst destilliertes Wasser oder ein geeignetes Nährmedium. Nach Ermittlung des Arbeitsdruckes $P_O$ wird das destillierte Wasser oder das Nährmedium hinreichend schnell durch die die Stoffe enthaltende wäßrige Lösung ausgetauscht und die Gehalte der Stoffe nach den Verfahren gemäß der Erfindung ermittelt.

Ausführungsformen des Meßkopfes (a, b) sowie eine Ausführungsform der Einrichtung gemäß der Erfindung sind in der Zeichnung schematisch dargestellt und werden in folgenden näher erläutert.

In der Zeichnung sind ferner Diagramme zu Ausführungsbeispielen der Verfahrensweise gemäß der Erfindung wiedergegeben. Es zeigen

Figur 1 einen Meßkopf a, bestehend aus einer osmotischen Zelle mit Druckmeßeinrichtung sowie einer Mikrometerschraube mit Regelstab,

Figur 2 einen Meßkopf a, bestehend aus einer osmotischen Zelle mit Druckmeßeinrichtung angebracht an einer Anlage, die die zu messende Lösung enthält,

Figur 3 einen Meßkopf b, bestehend aus einer osmotischen Zelle und einen an die Zelle angrenzenden Behälter,

Figur 4 Einrichtung mit Meßkopf b gemäß Figur 3 mit automatischer Steuerung des Meßvorganges sowie einer Prozeßsteuerung,

Figur 5 den Druckverlauf in der osmotischen Zelle während des Meßvorganges,

Figur 6 Eichdiagramme (Verfahren Ia), gemessen mittels einer Algenzelle,

Figur 7 Eichdiagramme (Verfahren Ia), gemessen mittels eines Meßkopfes b gemäß Figur 3, und

Figur 8 Eichdiagramme (Verfahren II), gemessen mittels eines Meßkopfes b gemäß Figur 3.

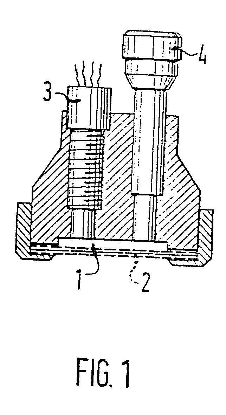

Der in Figur 1 dargestellte Meßkopf a besteht aus einer osmotischen Zelle 1 mit Membran 2, einer Druckmeßeinrichtung 3 und einem elektrische Signale abgebenden Druckwandler. Außerdem ist eine Einrichtung 4 zur kontrollierten Volumenänderung der osmotischen Zelle 1 vorgesehen, bestehend aus einer Mikrometerschraube mit Regelstab, mit dem eine meßbare Volumenänderung der osmotischen Zelle vorgenommen werden kann. Diese gezielte Volumenänderung, die eine Druckänderung in der osmotischen Zelle zur Folge hat, kann dazu dienen, die Starrheit der osmotischen Zelle über den Druckmeßwandler zu kontrollieren bzw. den Elastizitätsmodul der Zelle zu ermitteln.

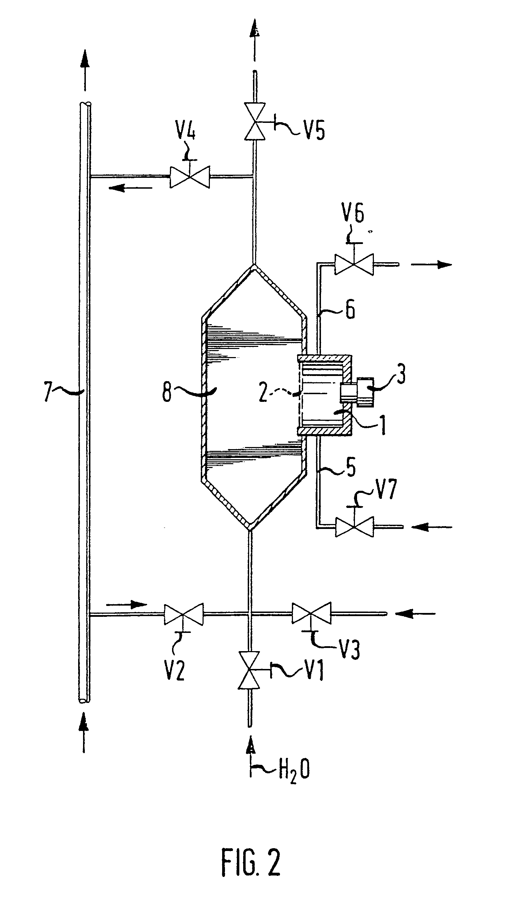

In Figur 2 ist ein Meßkopf a der in Fig. 1 dargestellten Art, bestehend aus osmotischer Zelle 1 und Druckmeßeinrichtung 3 im Einsatz dargestellt. Eine Einrichtung zur kontrollierten Volumenänderung ist bei dieser Ausführungsform nicht vorgesehen, jedoch eine verschließbare Zuleitung 5 und eine verschließbare Ableitung 6 für die Osmometerlösung.

Zur Bestimmung des Gehaltes an gelöstem Stoff einer in der Leitung 7 befindlichen Lösung wird zur Einstellung des Arbeitsdruckes $P_O$ zunächst eine geeignete Lösung, beispielsweise destilliertes Wasser, bei geöffneten Ventilen V1 und V5 und geschlossenen Ventilen V2, V3 und V4 in den Durchlaufbehälter 8 eingefüllt, wodurch die Lösung ($H_2O$) über die Membran 2 mit der Osmometerlösung, die sich in der osmotischen Zelle 1 befindet, in Verbindung gebracht wird. Nach Einstellen und Ermitteln des Arbeitsdruckes $P_O$ wird im Anschluß daran bei geöffneten Ventilen V2 und V4 oder V5 und geschlossenen Ventilen V1, V3 und gegebenenfalls V5 oder V4 die zu untersuchende Lösung in den Behälter 8 eingefüllt, worauf sich zunächst der Minimaldruck $P_{min}$ und darauf der Enddruck $P_E$ einstellen. Bei diesem Meßvorgang sind selbstverständlich die Ventile V6 und V7 geschlossen.

Zur Eichung kann gegebenenfalls über das Ventil V3 bei einsprechender Einstellung der übrigen Ventile eine Eichlösung in den Behälter 8 eingefüllt werden.

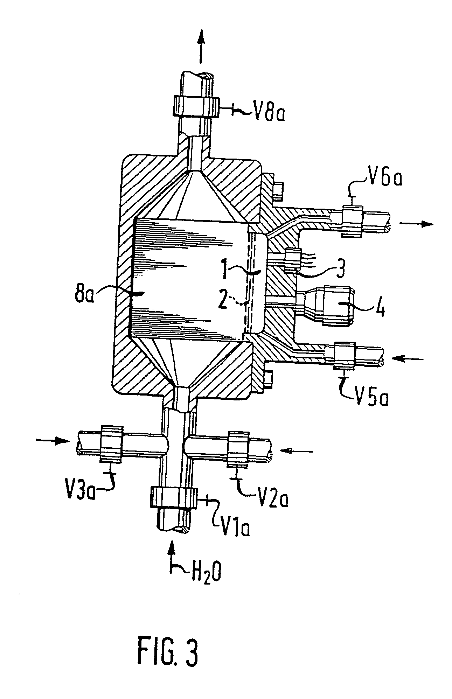

In Figur 3 ist ein Meßkopf b mit osmotischer Zelle 1 und Membran 2 dargestellt, in den ein dem Behälter 8 der Figur 2 entsprechender Behälter 8a integriert ist. Die Ventile V1a, V2a, V3a, V5a und V6a entsprechen den in Figur 2 dargestellten Ventilen V1, V2, V3, V5 und V6. V8a ist das Ausgangsventil des in den Meßkopf integrierten Behälters 8a. Bei dem in Figur 3 dargestellten Meßkopf ist ebenfalls eine Druckmeßeinrichtung 3 mit elektrischer Anzeige sowie eine Einrichtung 4 zur kontrollierten Volumenänderung der osmotischen Zelle 1 vorgesehen.

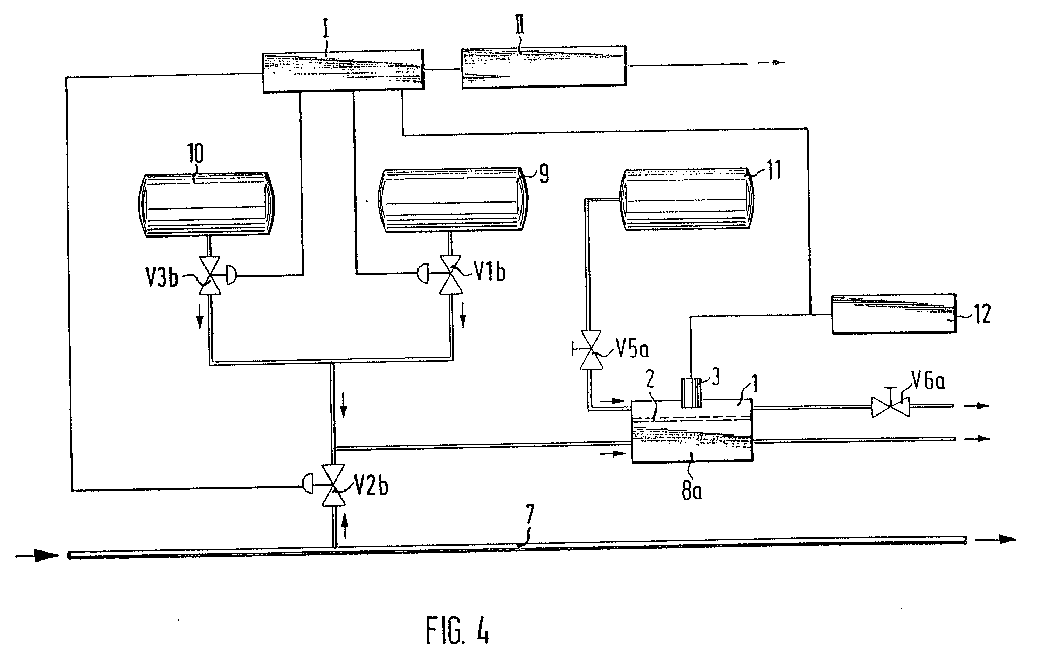

Figur 4 zeigt eine Einrichtung mit einem Meßkopf b der in Figur 3 dargestellten Art, der zur Bestimmung des Gehaltes von Stoffen in einer in der Leitung 7 fließenden Lösung vorgesehen ist. Die Ventile V1b, V2b und V3b entsprechen den in Figur 3 dargestellten Ventilen V1a, V2a und V3a, sind jedoch als fernsteuerbare Absperrorgane ausgebildet, die mit dem Steuergerät 1 in elektrischer Verbindung stehen. Mittels dieses Steuergerätes I wird in vorbestimmten Zeitabständen zur Einstellung eines Arbeitsdruckes $P_O$ Lösungsmittel aus dem Speicherbehälter 9 über das Ventil V1b (bei geschlossenen Ventilen V2b und V3b) in den Behälter 8a eingespeist und danach die zu untersuchende Lösung aus der Leitung 7 über das Ventil V2b (bei geschlossenen Ventilen V1b und V3b) dem Behälter 8a zugeführt. Darüberhinaus kann in selbstverständlich größeren Zeitabständen mittels des Steuergerätes I das Einspeisen von Eichlösungen aus dem Speicherbehälter 10 über das Ventil V3b (bei geschlossenen Ventilen V1b und V2b) in den Behälter 8a veranlaßt werden. Für die Osmometerlösung ist ferner ein Speicherbehälter 11 Vorgesehe.

Wie aus Figur 4 ferner hervorgeht, werden die elektrischen Ausgangssignale der Druckmeßeinrichtung 3 auf einem Anzeigegerät 12 angezeigt und vom Steuergerät 1 übernommen. Von einem Steuergerät II, das mit dem Steuergerät I in elektrischer Verbindung steht, wird in Abhängigkeit von den ermittelten Meßwerten der Prozeß gesteuert

## Ausführungsbeispiele unter Verwendung einer Algenzelle als osmotischer Zelle

Mittels einer Internodialzelle der Alge *Chara corallina* als osmotischer Zelle wurden wäßrige Lösungen, in denen als permeierender Stoff Ethanol und als nichtpermeierender Stoff Saccharose in unterschiedlichen Konzentrationen gelöst waren, untersucht. Die Messung des Druckes in der Algenzelle erfolgte dabei mittels einer in die Zelle eingeführten Druckmeßeinrichtung (Druckmeßsonde).

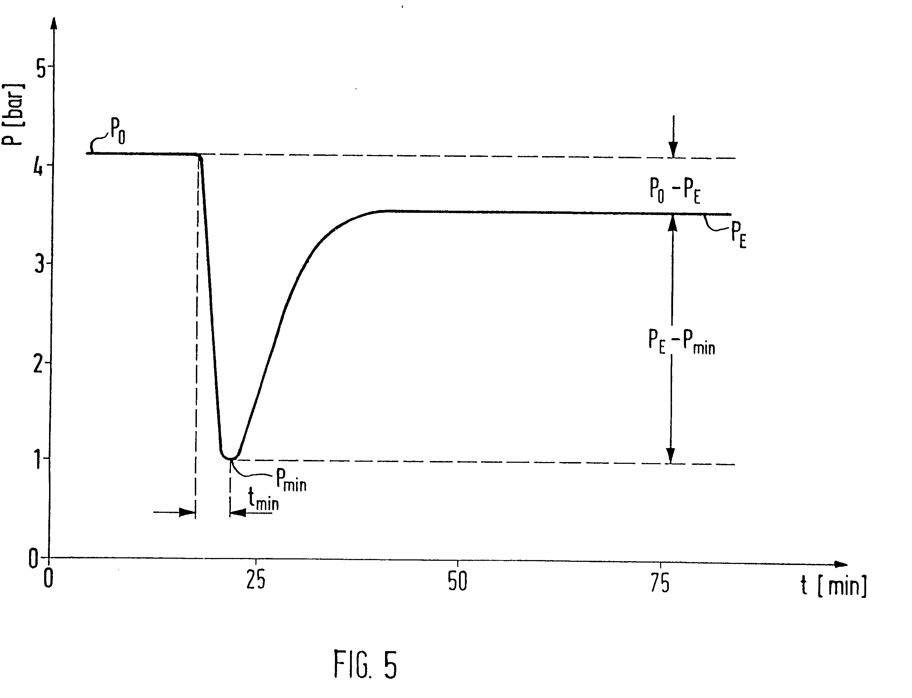

Die Algenzelle befand sich zur Messung in einem Behälter, der zunächst zur Einstellung des Arbeitsdruckes $P_O$ mit destilliertem Wasser gefüllt war. Das destillierte Wasser wurde darauf zur Einleitung des Meßvorganges sehr schnell durch die zu untersuchende Lösung ausgetauscht, worauf der Druck - wie in Figur 5 im Prinzip dargestellt - in der Algenzelle zunächst auf den Minimaldruck $P_{min}$ absank, um dann den Enddruck $P_E$ zu erreichen. (Die in Figur 5 dargestellte Kurve ist die Meßkurve für das Ausführungsbeispiel 2b).

Bei den Ausführungsbeispielen 1a - 1c wurde nach der Verfahrensvariante Ib, bei den Ausführungsbeispielen 1d und 1e nach der Verfahrensvariante Ia vorgegangen.

## Ausführungsbeispiel 1a

Es wurde eine wäßrige Lösung, in die 103,5 mMol Ethanol (4,77 g/l) und 10 mMol Saccharose (3,42 g/l) eingewogen worden waren, untersucht.

**Die Meßwerte:**

$P_O$ = 6,19 bar
$P_{min}$ = 5,35 bar
$P_E$ = 5,90 bar
$t_{min}$ = 20,0 s

der Reflektionskoeffizient, der zuvor gemessen worden war, betrug $\sigma_s$ = 0,32.

Nach Gleichung (1) bzw. Gleichung (2) wurden folgendde Werte errechnet:

$C^°_s$ = 106 mMol Ethanol
$C^°_{imp}$ = 11,7 mMol Saccharose.

**Ausführungsbeispiel 1b**

Die zu untersuchende Lösung enthielt 103,5 mMol Ethanol (4,77 g/l) und 20 mMol Saccharose (6,85 g/l).

**Die Meßwerte:**

$P_O$ = 6,12 bar
$P_{min}$ = 5,10 bar
$P_E$ = 5,62 bar
$t_{min}$ = 21,2 s.

**Die errechneten Werte:**

$C^°_s$ = 99 mMol Ethanol
$C^°_{imp}$ = 20,2 mMol Saccharose.

**Ausführungsbeispiel 1c**

Die zu untersuchende Lösung enthielt 203,5 mMol Ethanol (9,38 g/l) und 20 mMol Saccharose (6,85 g/l).

**Die Meßwerte:**

$P_O$ = 6,08 bar
$P_{min}$ = 4,44 bar
$P_E$ = 5,56 bar
$t_{min}$ = 22,5 s.

**Die errechneten Werte:**

$C^°_s$ = 204 mMol Ethanol
$C^°_{imp}$ = 21,0 mMol Saccharose

**Die Ausführungsbeispiele 1d und 1e**

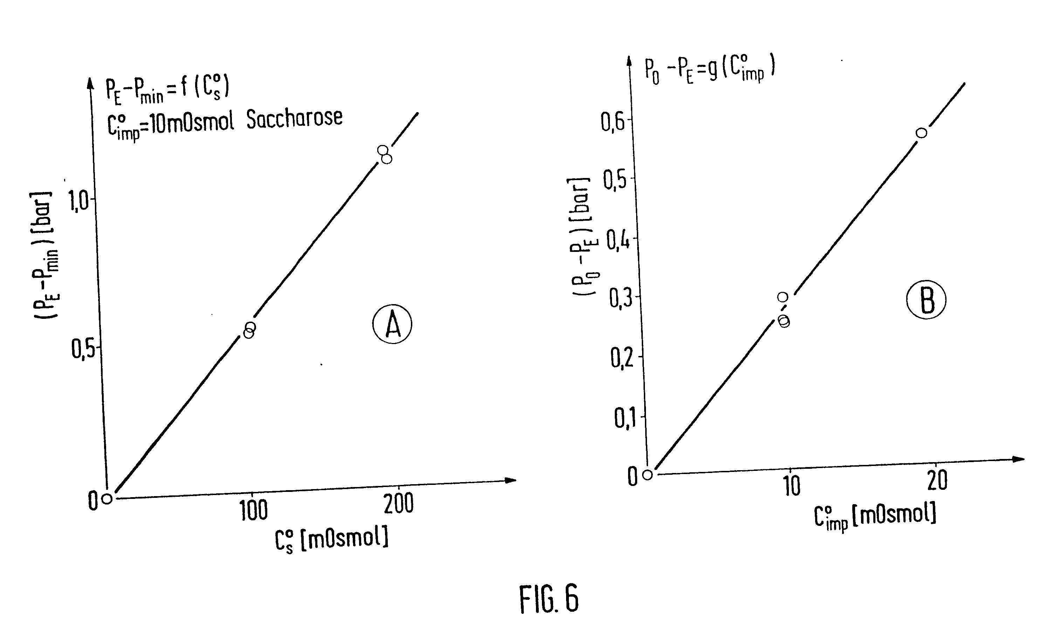

beziehen sich auf die Verfahrensweise Ia gemäß der Erfindung, nach der die Konzentrationswerte der gesuchten Stoffe unter Verwendung von Eichwerten ermittelt werden. Hierzu wurde für $(P_E - P_{min})$ = $f(C^°_s)$ für die Bestimmung des Gehaltes $C^°_s$ an permeierendem Stoff (Ethanol) die in Figur 6 mit A bezeichnete Eichkurve und für die Bestimmung des Gehaltes $C^°_{imp}$ an nichtpermeierendem Stoff (Saccharose) die in Figur 6 mit B bezeichnete Eichkurve $(P_O - P_E)$ = $g$ $(C^°_{imp})$ verwendet. Die Eichkurve A war mittels der Algenzelle für jeweils 10 mMol Saccharose aber unterschiedliche Konzentrationen an Ethanol enthaltenden Lösungen gemessen worden.

**Ausführungsbeispiel 1d**

Die zu untersuchende Lösung enthielt 103,5 mMol Ethanol (4,77 g/l) und 10 mMol Saccharose (3,42 g/l).

**Die Meßwerte:**

$P_O$ = 6,19 bar
$P_{min}$ = 5,35 bar
$P_E$ = 5,90 bar

Die unter Verwendung der Eichkurven in Figur 6 ermittelten Werte

$C^\circ_s$ = 102 mMol Ethanol
$C^\circ_{imp}$ = 10,7 mMol Saccharose

**Ausführungsbeispiel 1e**

Die zu untersuchende Lösung enthielt 201,5 mMol Ethanol (9.28 g/l) und 10 mMol Saccharose (3,42 g/l).

**Die Meßwerte:**

$P_O$ = 6,10 bar
$P_{min}$ = 4,70 bar
$P_E$ = 5,83 bar

Die unter Verwendung der Eichkurven in Figur 6 ermittelten Werte

$C^\circ_s$ = 206 mMol Ethanol
$C^\circ_{imp}$ = 10,0 mMol Saccharose

**Ausführungsbeispiele unter Verwendung einer künstlich hergestellten osmotischen Zelle**

Unter Verwendung eines Meßkopfes b der in Figur 3 dargestellten Ausführungsform wurden wäßrige Lösungen, in denen als permeierender Stoff Methanol und als nichtpermeierender Stoff Natriumchlorid gelöst waren, untersucht. Der Meßkopf bestand aus einem Gehäuse aus Plexiglas (eingetragenes Warenzeichen). Die Membran war eine asymmetrische Polyamidmembran (Unkehrosmose-Membran) mit einer Trenngrenze von 50 Dalton, die in die osmotische Zelle so eingesetzt worden war, daß die Trennschicht der Membran der Druckseite, also der osmotischen Zelle zugewandt war. Das Verhältnis von Volumen zu wirksamer Membranoberfläche der osmotischen Zelle betrug ca. 0,1 mm. Die Osmometerlösung war eine 0,15 (Beispiele 2a bis 2e) bzw. 0,25 (Beispiele 2f und 2g) molare Lösung von HEPES (N-2-hydroxyethyloperazin-N'-2-ethansulfonsäure; MG = 238,3 Dalton).

Bei den Ausführungsbeispielen 2a - 2c wurde nach der Verfahrensweise Ib gemäß der Erfindungvorgegangen, nach der die Konzentrationswerte der gesuchten Stoffe errechnet werden.

**Ausführungsbeispiel 2a**

Die untersuchte Lösung enthielt 405 mMol Methanol (12,98 g/l und 20 mOsmol NaCl (0,58 g/l)

**Die Meßwerte:**

$P_O$ = 4,10 bar
$P_{min}$ = 2,34 bar
$P_E$ = 3,65 bar
$t_{min}$ = 255 s

der Reflektionskoeffizient, der zuvor gemessen worden war, betrug $^\sigma s$ = 0,38.

**Die errechneten Werte:**

$C^\circ_s$ = 394 mMol Methanol
$C^\circ_{imp}$ = 18,5 mOsmol NaCl.

**Ausführungsbeispiel 2b**

Die untersuchte Lösung enthielt 809 mMol Methanol (25,92 g/l) und 20 mOsmol NaCl (0,58 g/l).

**Die Meßwerte:**

$P_O$  = 4,08 bar
$P_{min}$  = 0,96 bar
$P_E$  = 3,61 bar
$t_{min}$  = 265 s

**Die errechneten Werte:**

$C^o_s$  = 800 mMol Methanol
$C^o_{imp}$  = 19,1 mOsmol NaCl.

Die Meßkurve für dieses Ausführungsbeispiel ist in Figur 5 dargestellt.

**Ausführungsbeispiel 2c**

Die zu untersuchende Lösung enthielt 810 mMol Methanol (25,95 g/l) und 40 mOsmol NaCl (1,17 g/l).

**Die Meßwerte:**

$P_O$  = 4,19 bar
$P_{min}$  = 0,86 bar
$P_E$  = 3,19 bar
$t_{min}$  = 328 s

**Die errechneten Werte:**

$C^o_s$  = 804 mMol Methanol
$C^o_{imp}$  = 40,7 mOsmol NaCl.

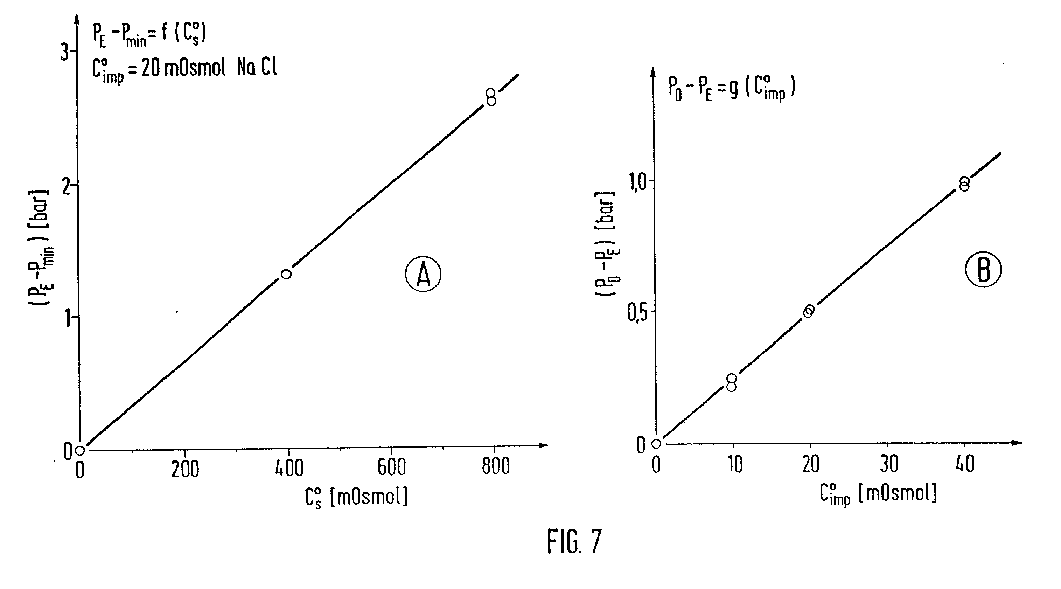

Bei den Ausführungsbeispielen 2d und 2e wurde nach der Verfahrensweise la vorgegangen, nach der die Konzentrationswerte der gesuchten Stoffe unter Verwendung von Eichwerten ermittelt werden. Hierzu wurde für die Bestimmung des Gehaltes $C^o_s$ an permeierendem Stoff (Methanol) die in Figur 7 mit A bezeichnete Eichkurve und für die Bestimmung des Gehaltes $C^o_{imp}$ an nichtpermeierendem Stoff (NaCl) die in Figur 7 mit B bezeichnete Eichkurve verwendet. Die Eichkurve A war mittels des Meßkopfes für jeweils 20 mOsmol NaCl aber unterschiedliche Konzentrationen an Methanol enthaltenden Lösungen gemessen worden.

**Ausführungsbeispiel 2d**

Die zu untersuchende Lösung enthielt 405 mMol Methanol (12,98 g/l) und 20 mOsmol NaCl (0,58 g/l).

**Die Meßwerte:**

$P_O$  = 4,10 bar
$P_{min}$  = 2,34 bar
$P_E$  = 3,65 bar

Die unter Verwendung der Eichkurven in Figur 7 ermittelten Werte

$C^o_s$  = 404 mMol Methanol
$C^o_{imp}$  = 18,3 mOsmol NaCl.

**Ausführungsbeispiel 2e**

Die zu untersuchende Lösung enthielt 810 mMol Methanol (25,95 g/l) und 40 mOsmol NaCl (1,17 g/l).

**Die Meßwerte:**

$P_O$ = 4,19 bar
$P_{min}$ = 0,86 bar
$P_E$ = 3,19 bar

Die unter Verwendung der Eichkurven in Figur 7 ermittelten Werte

$C^\circ_s$ = 812 mMol Methanol
$C^\circ_{imp}$ = 40,7 mOsmol NaCl.

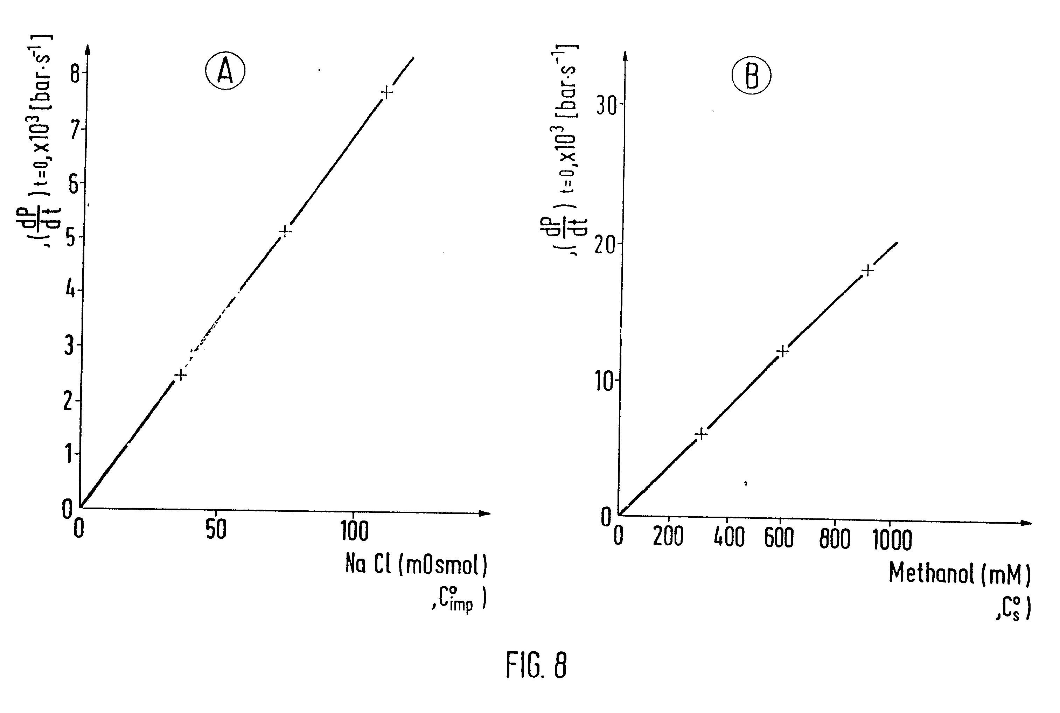

Bei den Ausführungsbeispielen 2f und 2g wurde nach der Verfahrensweise II vorgegangen, nach der zunächst (dP/dt) t=O für die Mischung (Methanol und Natriumchlorid) bestimmt wurde und ($P_O$ - $P_E$) für den nichtpermeierenden Stoff (NaCl) separat ermittelt wurde. Aus $P_O$ - $P_E$) ergibt sich die Konzentration des nichtpermeierenden Stoffes und mit Hilfe des Eichdiagramms in Fig. 8A sein Beitrag zum gemessenen dP/t=O. Der Restbetrag für die gemessene Anfangsneigung ergibt mit Hilfe von Fig. 8B die Konzentration des permeierenden Stoffes (Methanol).

**Ausführungsbespiel 2f**

Die zu untersuchende Lösung enthielt 304 mMol Methanol (9,74 g/l) und 111 mOsmol NaCl (6,87 g/l)

**Die Meßwerte:**

$P_O$ - $P_E$ = 2,71 bar (t = 20°C) und

$$\left(\frac{dP}{dt\, t = O}\right) = 13,67 \cdot 10^{-3}\ bar \cdot s^{-1}\ ergeben$$

unter Verwendung der Eichdiagramme 8A, B

$C^\circ_s$ = 295 mMol und
$C^\circ_{imp}$ = 111,2 mOsmol.

**Ausrührungsbeispiel 2g**

Die zu untersuchende Lösung enthielt 901 mMol Methanol (28,87 g/l) und 74 mOsmol NaCl (4,53 g/l).

**Die Meßwerte:**

$P_O$ - $P_E$ = 1,85 bar (t = 20°C) und

$$\left(\frac{dP}{(dt\, t = 0)}\right) = 23,82 \cdot 10^{-1}\ bar \cdot s^{-1}\ ergeben$$

unter Verwendung der Eichdiagramme 8A, B

$C^\circ_s$ = 908 mMol und
$C^\circ_{imp}$ = 75,9 mOsmol.

**Ausführungsbeispiel 2h**

Bestimmung von $P_E$ aus der zeitlichen Änderung der Steigung im Bereich des Minimums von Druck/Zeit-Kurven.
Die Testlösung enthält $C^0_s$ = 494 mOsmol Ammoniak als permeierender und $C^\circ_{imp}$ = 16,2 mOsmol Mannit als nichtpermeierender Stoff. Es waren:

$P_O$ = 6,84 bar; $k_S$ = 2,821 · $10^{-3}$ $s^{-1}$
$P_{min}$ = 6,16 bar; $k_w$ = 3,793 · $10^{-3}$ $s^{-1}$

$$\left(\frac{d^2p}{dt^2}\right)_{min} = 4{,}0 \cdot 10^{-6} \text{ bar} \cdot \text{s}^{-2}; \quad \frac{\varepsilon}{\varepsilon + RT \cdot C^i_{imp}} = 0{,}946$$

**Hieraus ergibt die Glg. (4a)**

$P_E - P_{min}$ = 0,37 bar und
$P_E$ = 6,53 bar.

Aus $(P_O - P_E)$ = 0,31 bar erhält man mit Glg. (4):

$C°_{imp}$ = 13,4 mOsmol Mannit gegenüber vorgegebenen 16,2 mOsmol. Der gemessene $P_E$-Wert betrug $P_E$ = 6,49 bar gegenüber berechneten 6,53 bar.


**Patentansprüche**

1. Verfahren zur Bestimmung des Gehaltes an in einem Lösungsmittel gelösten Stoffen mittels einer möglichst starren osmotischen Zelle (1) mit Druckmeßeinrichtung (3) zur Messung des hydrostatischen Druckes in der osmotischen Zelle (1), wobei die in der osmotischen Zelle (1) befindliche Osmometerlösung über eine Membran (2) mit möglichst hoher Leitfähigkeit für das Lösungsmittel mit der die Stoffe enthaltenden Lösung in Verbindung gebracht wird, *dadurch gekennzeichnet* daß eine Membran (2) verwendet wird, die ein derartiges Rückhaltevermögen für die Stoffe aufweist, daß einer der zu untersuchenden Stoffe in Bezug auf die Membran (2) permeierend und mindestens einer nichtpermeierend ist, und daß zunächst unter Verwendung einer geeigneten, mit der Osmometerlösung über die Membran (2) in Verbindung gebrachten Lösung sowie einer geeigneten Osmometerlösung ein Arbeitsdruck $P_O$ eingestellt und ermittelt wird, worauf die mit der Osmometerlösung über die Membran (2) in Verbindung gebrachte Lösung hinreichend schnell durch die die Stoffe enthaltende Lösung ausgetauscht wird, worauf der sich in der osmotischen Zelle (1) einstellende Minimaldruck $P_{min}$ sowie nach darauffolgendem Druckanstieg der sich in der osmotischen Zelle (1) einstellende Enddruck $P_E$ ermittelt werden, wobei sich nach vorheriger Eichung mit Lösungen vorgegebener Konzentration aus der Differenz $P_O - P_E$ der Gehalt des oder der nichtpermeierenden Stoffe in der zu untersuchenden Lösung und aus der Differenz $P_E - P_{min}$ der Gehalt des permeierenden Stoffes in der Lösung ergibt.

2. Verfahren zur Bestimmung des Gehaltes an in einem Lösungsmittel gelösten Stoffen mittels einer möglichst starren osmotischen Zelle (1) mit Druckmeßeinrichtung (3) zur Messung des hydrostatischen Druckes in der osmotischen Zelle (1), wobei die in der osmotischen Zelle befindliche Osmometerlösung über eine Membran (2) mit möglichst hoher Leitfähigkeit für das Lösungsmittel mit der die Stoffe enthaltenden Lösung in Verbindung gebracht wird, *dadurch gekennzeichnet* daß eine Membran (2) verwendet wird, die ein derartiges Rückhaltevermögen für die Stoffe aufweist, daß einer der zu untersuchenden Stoffe in Bezug auf die Membran (2) permeierend und mindestens einer nichtpermeierend ist, und daß zunächst unter Verwendung einer geeigneten, mit der Osmometerlösung über die Membran (2) in Verbindung gebrachten Lösung sowie einer geeigneten Osmometerlösung ein Arbeitsdruck $P_O$ eingestellt und ermittelt wird, worauf die mit der Osmometerlösung über die Membran (2) in Verbindung gebrachte Lösung hinreichend schnell durch die die Stoffe enthaltende Lösung ausgetauscht wird, worauf der sich in der osmotischen Zelle (1) einstellende Minimaldruck $P_{min}$, die Zeit $t_{min}$, innerhalb der sich nach Austausch der beiden Lösungen der Minimaldruck $P_{min}$ einstellt, die Geschwindigkeitskonstante $k_s$ für den nach dem Minimaldruck erfolgenden exponentiellen Druckanstieg und der nach dem Druckanstieg sich einstellende Enddruck $P_E$ ermittelt werden, wonach sich der Gehalt $C°_s$ des permeierenden Stoffes s aus der Beziehung

$P_E - P_{min}$ = $\sigma_s \cdot RT \cdot C°_s \cdot \exp(-k_s \cdot t_{min})$
mit R = 8,31434 J/°K mol,
T = absolute Temperatur
und $\sigma_s$ = Reflektionskoeffizient von s

und sich der Gehalt $C°_{imp}$ des oder der nichtpermeierenden Stoffe aus der Beziehung

$P_O - P_E$ = $RT \cdot C°_{imp}$

ergeben.

3. Verfahren nach Anspruch 2, *dadurch gekennzeichnet* daß für den Fall, daß bei der Durchführung der Bestimmung auftretende Änderungen des Volumens der osmotischen Zelle (1) nicht vernachlässigbar sind, der Volumenelastizitätsmodul $\varepsilon$ der

osmotischen Zelle ($\varepsilon = V \dfrac{\Delta P}{\Delta V}$) mittels einer hier

für geeigneten Einrichtung ermittelt wird, wonach sich der Gehalt $C^o_s$ des permeierenden Stoffes aus der Beziehung

$$P_E - P_{min} = \frac{\varepsilon}{\varepsilon + RT \cdot C^i_{imp}} \cdot \sigma_s \cdot RT \cdot C^o_s \cdot \exp(-k_s \cdot t_{min})$$

mit $C^i_{imp}$ = Konzentration der Osmometerlösung und sich der Gehalt $C^o_{imp}$ des nichtpermeierenden Stoffes aus der Beziehung

$$P_O - P_E = \frac{\varepsilon}{\varepsilon + RT \cdot C^i_{imp}} RT \cdot C^o_{imp}$$

ergeben.

4. Verfahren nach einem der Ansprüche 1 bis 3, *dadurch gekennzeichnet*, daß die Geschwindigkeitskonstante $k_s$ für den nach dem Minimaldruck erfolgenden exponentiellen Druckanstieg und die zeitliche Änderung $(d^2p/dt^2)_{min}$ der Steigung im Druckminimum ermittelt werden und daß aus der Beziehung

$$k_s \cdot k_W = \frac{1}{P_E - P_{min}} \left(\frac{d^2p}{dt^2}_{min}\right)$$

der Enddruck $P_E$ errechnet wird, wobei zuvor für die verwendete osmotische Zelle (1) die Geschwindigkeitskonstante $k_W$ für die Druckänderung bis zum Minimum ermittelt worden ist.

5. Verfahren nach Anspruch 4, *dadurch gekennzeichnet*, daß die Geschwindigkeitskonstante $k_s$ für die zu untersuchende, die Stoffe enthaltende Lösung vorab bestimmt wird.

6. Verfahren zur Bestimmung des Gehaltes an in einem Lösungsmittel gelösten Stoffen mittels einer möglichst starren osmotischen Zelle (1) mit Druckmeßeinrichtung (3) zur Messung des hydrostatischen Druckes in der osmotischen Zelle (1), wobei die in der osmotischen Zelle (1) befindliche Osmometerlösung über eine Membran (2) mit möglichst großer Leitfähigkeit für das Lösungsmittel mit der die Stoffe enthaltenden Lösung in Verbindung gebracht wird,
*dadurch gekennzeichnet* daß eine Membran (2) mit möglichst großem Rückhaltvermögen für die Stoffe verwendet wird, und daß zunächst unter Verwendung einer geeigneten, mit der Osmometerlösung über die Membran (2) in Verbindung gebrachten Lösung sowie einer geeigneten Osmometerlösung ein Arbeitsdruck $P_O$ eingestellt wird, worauf für den Fall, daß die zu untersuchende Lösung zwei Stoffe enthält, nach Austausch der mit der Osmometerlösung über die Membran (2) in Verbindung gebrachten Lösung durch die die beiden Stoffe enthaltende Lösung aus dem aufgrund dieses Austauschs erfolgenden Druckabfall in der osmotischen Zelle (1) die Anfangsneigung $(dP/dt)_{t=O}$ der Druck/Zeit-Kurve bestimmt und mit dieser Meßgröße nach vorheriger Eichung mit Lösungen vorgegebener Konzentration oder aus der Beziehung

$$\left(\frac{dP}{dt}_{t=O}\right) = -\frac{A_o}{V_o} Lp \cdot \varepsilon \cdot RT (\sigma_1 \cdot C_1 + \sigma_2 \cdot C_2)$$

der Ergebniswert

$$X_1 = \sigma_1 C_1 + \sigma_2 C_2$$

ermittelt wird, wobei

$A_o$ die effektive Oberfläche der Membran,
$V_o$ das Volumen der osmotischen Zelle,
$Lp$ die hydraulische Leitfähigkeit der Membran,
$\varepsilon$ der Volumenelastizitätsmodul der osmotischen Zelle,
$R$ 8,31434 J/°K mol,
$T$ absolute Temperatur,
$\sigma_1$ der Reflektionskoeffizient des Stoffes 1,
$C_1$ der Gehalt des Stoffes 1,
$\sigma_2$ der Reflektionskoeffizient des Stoffes 2 und
$C_2$ der Gehalt des Stoffes 2 ist, und daß parallel zur Ermittlung des Ergebniswertes $X_1$ entweder nach dem beschriebenen Verfahren eine weitere Messung mittels einer zweiten osmotischen Zelle mit einer Membran mit anderem Rückhaltevermögen für die Stoffe erfolgt, wobei ein weiterer Ergebniswert

$$X_2 = \sigma_1 C_1 + \sigma'_2 C_2$$

ermittelt wird, und anschließend mittels der beiden ermittelten Ergebniswerte $X_1$ und $X_2$ die Gehalte der beiden Stoffe errechnet werden,

oder daß die weitere Messung mittels der zweiten osmotischen Zelle nach einem der Verfahren gemäß Anspruch 1 oder 2 durchgeführt wird, wobei eine Membran mit einem solchen Rückhaltevermögen für die Stoffe verwendet wird, daß hinsichtlich der verwendeten Membran der eine Stoff permeierend und der andere Stoff nichtpermeierend ist und wobei es hinreicht, daß nur der Gehalt des permeierenden oder der Gehalt des nichtpermeierenden Stoffes ermittelt wird, und unter Verwendung des Ergebniswertes $X_1$ die Gehalte beider Stoffe errechnet werden.

7. Verfahren nach Anspruch 6, *dadurch gekennzeichnet* daß die für eine vorgegebene osmotische Zelle konstante Größe

$$K = \frac{A_0}{V_0} \, Lp \cdot \varepsilon \cdot R \cdot T$$

durch Eichung bestimmt wird.

8. Meßkopf für eine Einrichtung zur Durchführung des Verfahrens nach einem der Ansprüche 1 bis 7, bestehend aus einer osmotischen Zelle (1) mit starrer Membran (2) und starrer Wandung aus Metall oder Kunststoff und mit einer Druckmeßeinrichtung (3) zur Messung des hydrostatischen Druckes in der osmotischen Zelle (1), wobei Wandung und Membran (2) die osmotische Zelle nach außen abgrenzen und die Membran (2) einen möglichst hohen Elastizitätsmodul und eine möglichst hohe Leitfähigkeit für das Lösungsmittel besitzt, *dadurch gekennzeichnet* daß die Membran (2) ein derartiges Rückhaltevermögen für die in der zu untersuchenden Lösung befindlichen Stoffe aufweist, daß einer der zu untersuchenden Stoffe in Bezug auf die Membran permeierend und mindestens einer nichtpermeierend ist und daß das Verhältnis des Volumens der osmotischen Zelle (1) zur effektiven Oberfläche der Membran (2) höchstens 0,2 mm beträgt.

9. Meßkopf für eine Einrichtung zur Durchführung des Verfahrens nach einem der Ansprüche 1 bis 7, wobei der Meßkopf aus einer osmotischen Zelle (1) mit starrer Wandung aus Metall oder Kunststoff, mit einer starren Membran (2) mit möglichst hoher Leitfähigkeit für das Lösungsmittel und möglichst hohem Elastizitätsmodul und einer mit Druckmeßeinrichtung (3) zur Messung des hydrostatischen Druckes in der osmotischen Zelle (1) und einem Behälter (8a) besteht, der mit der osmotischen Zelle (1) derart in Verbindung steht, daß sein Innenraum an die Membran (2) der osmotischen Zelle (1) angrenzt, *dadurch gekennzeichnet* daß die Membran (2) ein derartiges Rückhaltevermögen für die in der zu untersuchenden Lösung befindlichen Stoffe aufweist, daß einer der zu untersuchenden Stoffe in Bezug auf die Membran (2) permeierend und mindestens einer nichtpermeierend ist, daß das Verhältnis des Volumens der osmotischen Zelle (1) zur effektiven Oberfläche der Membran (2) höchstens 0,2 mm beträgt und daß der Behälter (8a) mit Zu- und Ableitung für die Lösung zur Einstellung des Arbeitsdruckes $P_0$ für die zu untersuchende Lösung sowie ggf. für eine Eichlösung versehen ist, wobei die Zu- und Ableitung des Behälters (8a) sowie der Behälterinnenraum so ausgebildet sind, daß die in ihn eingespeisten Lösungen möglichst schnell austauschbar sind.

10. Meßkopf nach einem der Ansprüche 8 oder 9, *dadurch gekennzeichnet* daß die Membran (2) eine Hyperfiltrationsmembran ist.

11. Meßkopf nach einem der Ansprüche 8 bis 10, *dadurch gekennzeichnet* daß die Membran (2) eine Hohlfasermembran ist.

12. Meßkopf nach einem der Ansprüche 8 bis 10, *dadurch gekennzeichnet* daß die osmotische Zelle (1) eine Zu- und eine Ableitung für die Osmometerlösung aufweist.

13. Meßkopf nach einem der Ansprüche 8 bis 12, *dadurch gekennzeichnet*, daß das Verhältnis des Volumens der osmotischen Zelle (1) zur effektiven Oberfläche der Membran (2) möglichst klein ist.

14. Meßkopf nach einem der Ansprüche 8 bis 13, *dadurch gekennzeichnet*, daß die osmotische Zelle (1) mit einem Rührer versehen ist.

15. Meßkopf nach einem der Ansprüche 8 bis 14, *dadurch gekennzeichnet*, daß die Membran (2) durch ein Metallgitter verstärkt ist.

# EP 0 183 072 B1

16. Meßkopf nach einem der Ansprüche 8 bis 15, *dadurch gekennzeichnet*, daß eine Einrichtung (4) zur kontrollierten Volumenänderung der osmotischen Zelle (1) vorgesehen ist.

17. Meßkopf nach einem der Ansprüche 8 bis 16, *dadurch gekennzeichnet*, daß die Druckmeßeinrichtung (3) elektrische Ausgangssignale abgibt, die ein Maß für den Gehalt an Stoffen in der zu Untersuchenden Lösung sind. ·

18. Einrichtung zur Bestimmung des Gehaltes an in einem Lösungsmittel gelösten Stoffen mit einem oder zwei Meßköpfen gemäß Anspruch 8, ausgestaltet gemäß einem der Ansprüche 10 bis 17, *dadurch gekennzeichnet*, daß ein Behälter (8) vorgesehen ist, in oder an dem der oder die Meßköpfe, an dessen Innenraum mit der Membran (2) angrenzend, angebracht sind und der wahlweise mit einer Lösung zur Einstellung des Arbeitsdruckes $P_O$, mit der zu untersuchenden Lösung und ggf. mit Eichlösungen beschickbar ist.

19. Einrichtung zur Bestimmung des Gehaltes an in einem Lösungsmittel gelösten Stoffen mit einem oder zwei Meßköpfen gemäß Anspruch 9, ausgestaltet gemäß einem der Ansprüche 10 bis 17 *dadurch gekennzeichnet*, daß mit der Zuleitung für den Behälter des oder der Meßköpfe Speicherbehälter (9) für die Lösung zur Einstellung des Arbeitsdruckes $P_O$ und ggf. für die osmotische Zelle ein Speicherbehälter (11) für die Osmometerlösung in Verbindung stehen und daß ferner ein mit der Zuleitung für den Behälter des oder der Meßköpfe in Verbindung stehender, die zu untersuchende Lösung enthaltender Aufnahmebehälter oder eine Rohrleitung (7) vorgesehen ist.

20. Einrichtung gemäß einem der Ansprüche 18 oder 19 *daduch gekennzeichnet*, daß ein Steuergerät zur Steuerung einer automatischen Betriebsweise der Einrichtung vorgesehen ist, wobei alternierend in vorbestimmten Zeitabständen die zur Einstellung des Arbeitsdruckes $P_O$ bestimmte Lösung und die zu untersuchende Lösung in den Behälter des Meßkopfes eingefüllt werden.

21. Einrichtung gemäß Anspruch 20, unter Verwendung eines Meßkopfes gemäß Anspruch 17, *dadurch gekennzeichnet*, daß eine weitere Steuer- und/oder Überwachungseinrichtung vorgesehen ist, die die elektrischen Ausgangssignale des oder der Meßköpfe aufnimmt und die zur Steuerung und/oder Überwachung von Vorgängen dient, die in funktioneller Abhängigkeit vom Gehalt der zu untersuchenden Stoffe stehen.

22. Verwendung einer Algenzelle als osmotische Zelle zur Durchführung des Verfahrens gemäß einem der Ansprüche 1 bis 7, wobei der in der Zelle herrschende hydrostatische Druck mittels einer in die Zelle eingeführten Druckmeßsonde gemessen wird.

23. Verwendung einer Algenzelle gemäß Anspruch 20, *dadurch gekennzeichnet*, daß die Algenzelle eine Internodialzelle von Characeen ist.

## Claims

1. Method of determining the content of substances dissolved in a solvent, by means of as rigid as possible an osmotic cell (1) with a pressure measuring device (3) for measuring the hydrostatic pressure in the osmotic cell (1), the osmometric solution present in the osmotic cell (1) being brought into communication through a membrane (2) having as high conductivity for the solvent as possible with the solution which contains the substances, characterised in that a membrane (2) is used which has such a retaining ability for the substances that one of the substances to be examined is permeating with respect to the membrane (2) and at least one is non-permeating, and that in the first instance with the use of a suitable solution brought into communication with the osmometric solution through the membrane (2), also of a suitable osmometric solution, a working pressure $P_O$ is set up and ascertained, whereupon the solution brought into communication with the osmometric solution through the membrane (2) has the solution containing the substances substituted for it sufficiently rapidly, whereupon there are ascertained the minimum pressure Pmin which is set up in the osmotic cell (1) and also, after a thereafter occurring pressure rise, the end pressure $P_E$ which is set up in the osmotic cell (1), and after calibration beforehand with solutions of given concentration the content of the non-permeating substance or substances in the solution being investigated is obtained from the difference $P_O - P_E$, and the content of permeating substance in the solution is obtained from the difference $P_E - P_{min}$.

2. Method of determining the content of substances dissolved in a solvent, by means of as rigid as possible an osmotic cell (1) with a pressure measuring device (3) for measuring the hydrostatic pressure in the osmotic cell (1), the osmometric solution present in the osmotic cell being brought into communication through a membrane (2) having as high conductivity for the solvent as possible with the solution which contains the substances, characterised in that a membrane (2) is used which has such a retaining ability for the substances that one of the substances to be investigated is permeating with respect to the membrane (2) and at least one is non-permeating, and that in the first instance with the use of a suitable solution brought into communication with the osmometric solution through the membrane (2), also of a suitable osmometric solution, a working pressure $P_O$ is set up and ascertained, whereupon the solution containing the substances is substituted sufficiently rapidly for the solution which had been brought into communication with the osmometric solution through the membrane (2), whereupon the minimum pressure $p_{min}$ set up in the osmotic cell (1), the time $t_{min}$ within which the minimum pressure Pmin is set up after the exchange of the two solutions, the velocity constant $k_s$ for the exponential pressure increase occurring after the minimum pressure, and the end pressure $P_E$ set up

17

after the pressure increase, are ascertained, whereafter the content $C^\circ_s$ of permeating substance s is obtained from the equation

$$P_E - P_{min} = \sigma_s \cdot RT \cdot C^\circ_s \cdot \exp(-k_s \cdot t_{min}).$$

with $R = 8.31434$ J/°K mol
$T$ = absolute temperature

and $\sigma_s$ reflection coefficient of s, and the content $C^\circ_{imp}$ of the non-permeating substance or substances is obtained from the equation

$$P_O - P_E = RT \cdot C^\circ_{imp}$$

3. Method according to claim 2, *characterised* in that in cases where variations in the volume of the osmotic cell (1) occurring when carrying out determination are not negligible, the volume elasticity modulus $\varepsilon$ of the osmotic cell ($\varepsilon = V \,\Delta P/\Delta V$) is ascertained by means of a device suitable for the purpose, whereafter the content $C^\circ_s$ of the permeating substance is obtained from the equation

$$P_E - P_{min} = \frac{\varepsilon}{\varepsilon + RT \cdot C^i_{imp}} \cdot \sigma \cdot RT \cdot C^\circ_s \cdot \exp(-k_s \cdot t_{min})$$

with $C^i_{imp}$ = concentration of the osmometric solution and the content Coimp of the non-permeating substance is obtained from the equation

$$P_O - P_E = \frac{\varepsilon}{\varepsilon + RT \cdot C^i_{imp.}} RT \cdot C^\circ_{imp.}$$

4. Method according to one of claims 1 to 3, *characterised* in that the velocity constant $k_s$ for the exponential pressure increase occurring after the minimum pressure, also the alteration with respect to time $(d^2P/dt^2)_{min}$ of the slope in the pressure minimum are ascertained, and that the end pressure $P_E$ is calculated from the equation

$$k_s \cdot k_W = \frac{1}{P_E - P_{min}} \cdot \left(\frac{d^2p}{dt^2}\right)_{min.}$$

the velocity constant $k_W$ for the pressure alteration up to minimum having been ascertained previously for the osmotic cell (1) being used.

5. Method according to claim 4, *characterised* in that the velocity constant $k_s$ for the solution containing the substances and which is to be examined is determined beforehand.

6. Method of determining the content of substances which are in solution in a solvent by means of as rigid as possible an osmotic cell (1), with a pressure measuring device (3) for measuring the hydrostatic pressure in the osmotic cell (1), the osmometric solution present in the osmotic cell (1) being brought into communication, via a membrane (2) with the greatest possible conductivity for the solvent, with the solution which contains the substances, characterised in that a membrane (2) is used which has as great a retaining ability as possible for the substances, and that in the first instance using a suitable solution brought into communication with the osmometric solution through the membrane (2), and using also a suitable osmometric solution, a working pressure $P_O$ is set up, whereupon, in the event that the solution being investigated contains two substances, after the solution brought into communication with the osmometric solution through the membrane (2) has been substituted by the solution containing the two substances, the initial slope $(dP/dt)$ t = 0 of the pressure/time curve is ascertained from the pressure drop in the osmotic cell (1) which occurs as a result of this substitution, and with this measurement quantity, after previous calibration with solutions of predetermined concentration, or from the equation

$$\left(\frac{dP}{dt}\right)_{t=0} = \frac{A_o}{V_o} Lp \cdot \varepsilon \cdot RT (\sigma_1 \cdot C_1 + \sigma_2 \cdot C_2)$$

the result value

$$X_1 = \sigma_1 C_1 + \sigma_2 C_2$$

is ascertained, wherein

18

EP 0 183 072 B1

$A_0$ is the effective surface of the membrane,
$V_0$ the volume of the osmotic cell,
$Lp$ the hydraulic conductivity of the membrane,
$\varepsilon$ the volume elasticity modulus of the osmotic cell,
R 8.31434 J/°K mol,
T is the absolute temperature,
$\sigma_1$ the reflection coefficient of substance 1,
$C_1$ the content of substance 1,
$\sigma_2$ the reflection coefficient of substance 2, and
$C_2$ the content of substance 2, and that in parallel with the ascertaining of the result value $X_1$ either in accordance with the described method a further measuring operation is carried out by means of a second osmotic cell with a membrane having a different retaining ability for the substances, wherein a further result value

$$X_2 = \sigma'_1 C_1 + \sigma'_2 C_2$$

is ascertained, and then the contents of the two substances are calculated by means of the two ascertained result values $X_1$ and $X_2$,
or that the further measuring operation is carried out by means of the second osmotic cell with one of the methods according to claim 1 or 2, a membrane being used which has such a retaining ability for the substances that one substance is permeating and the other is non-permeating with respect to the membrane being used, and it being sufficient to ascertain only the content of the permeating substance or the content of the non-permeating substance, the contents of the two substances being calculated with the use of the result value $X_1$.

7. Method according to claim 6, characterised in that the constant value for a given osmotic cell

$$K = A_0/V_0 \cdot Lp \cdot \varepsilon \cdot R \cdot T$$

is determined by calibration.

8. Measuring head for an apparatus for carrying out the method according to one of claims 1 to 7, consisting of an osmotic cell (1) with rigid membrane (2) and rigid wall of metal or synthetic plastic material, and with a pressure measuring device (3) for measuring the hydrostatic pressure in the osmotic cell (1), wherein wall and membrane (2) form outer boundaries of the osmotic cell and the membrane (2)has as high an elasticity modulus as possible and as high conductivity as possible for the solvent, characterised in that the membrane (2) has such a retaining ability for the substances present in the solution being investigated that one of the substances being investigated is permeating with regard to the membrane and at least one is non-permeating, and that the ratio of the volume of the osmotic cell (1) to the effective surface of the membrane (2) amounts to 0.2 mm at the most.

9. Measuring head for an apparatus for carrying out the method according to one of claims 1 to 7, the measuring head consisting of an osmotic cell (1) with rigid wall of metal or synthetic plastic material, with a rigid membrane (2) with as high conductivity for the solvent as possible and with as high an elasticity modulus as possible, and with a pressure measuring device (3) for measuring the hydrostatic pressure in the osmotic cell (1), and a container (8a) which is so connected to the osmotic cell (1) that its interior space adjoins the membrane (2) of the osmotic cell (1), characterised in that the membrane (2) has such a retaining ability for the substances present in the solution being investigated that one of the substances is permeating with respect to the membrane (2) and at least one is non-permeating, that the ratio of the volume of the osmotic cell (1) to the effective surface of the membrane (2) amounts to at the most 0.2 mm, and that the container (8a) is provided with feed and discharge ducts for the solution for setting up the working pressure $P_0$, for the solution being examined, and also for a calibration solution if appropriate, the feed and discharge ducts of the container (8a) and also the container interior space being so constructed that the solutions fed into it are exchangeable as rapidly as possible.

10. Measuring head according to one of claims 8 or 9, *characterised in* that the membrane (2) is a hyperfiltration membrane.

11. Measuring head according to one of claims 8 to 10, *characterised in* that the membrane (2) is a hollow fibre membrane.

12. Measuring head according to one of claims 8 to 10, *characterised in* that the osmotic cell (1) has feed and discharge ducts for the osmometric solution.

13. Measuring head according to one of claims 8 to 12, *characterized in* that the ratio of the volume of the osmotic cell (1) to the effective surface of the membrane (2) is as small as possible.

19

14. Measuring head according to one of claims 8 to 13, *characterised in* that the osmotic cell (1) is provided with an agitator.

15. Measuring head according to one of claims 8 to 14, *characterised in* that the membrane (2) is reinforced with a metal grid.

16. Measuring head according to one of claims 8 to 15, *characterised in* that a device (4) is provided for controlled alteration of the volume of the osmotic cell (1).

17. Measuring head according to one of claims 8 to 16, *characterised in* that the pressure measuring device (3) emits electrical output signals which are a measure of the content of substances in the solution which is being investigated.

18. Apparatus for determining the content of substances dissolved in a solvent, having one or two measuring heads according to claim 8, arranged according to one of claims 10 to 17, *characterised in* that a container (8) is provided in or on which the measuring head or heads are arranged with the membrane (2) adjacent to the interior space thereof, and which is adapted to be fed selectively with a solution for setting up the working pressure P$_O$, with the solution to be examined, and with calibration solutions if appropriate.

19. Apparatus for determining the content of subsubstances dissolved in a solvent, with one or two measuring heads according to claim 9, arranged according to one of claims 10 to 17, *characterised in* that there are connected to the feed duct for the container of the measuring head or heads storage containers (9) for the solution for setting up the working pressure P$_O$ and if appropriate for the osmotic cell a storage container (11) for the osmometric solution, and that moreover a reception container or a conduit (7) is provided which is connected to the feed duct for the container of the measuring head or heads and which contains the solution to be examined.

20. Apparatus according to one of claims 18 or 19, *characterised in* that a control unit is provided for controlling an automatic manner of operation of the apparatus, the solution intended for the setting up of the working pressure P$_O$ and the solution which is to be investigated being fed into the container of the measuring head alternately at predetermined intervals of time.

21. Apparatus according to claim 20, using a measuring head according to claim 17, *characterised in* that a further control and/or monitoring device is provided which receives the electrical output signals of the measuring head or heads and which serves for the control and/or monitoring of operations which are functionally dependent on the content of the substances being examined.

22. Use of an algal cell as osmotic cell for carrying out the method according to one of claims 1 to 7, wherein the hydrostatic pressure prevailing in the cell is measured by means of a pressure measuring probe introduced into the cell.

23. Use of an algal cell according to claim 20, *characterised in* that the algal cell is an internodial cell of Characeen.


## Revendications

1. Procédé pour déterminer la teneur en substances dissoutes dans un solvant au moyen d'une cellule osmotique (1) aussi rigide que possible et ayant un dispositif de mesure de la pression (3) destiné a mesurer la pression hydrostatique dans la cellule osmotique (1), la solution de l'osmomètre se trouvant dans la cellule osmotique (1) étant mise en communication, par l'intermédiaire d'une membrane (2) ayant une conductibilité aussi grande que possible pour le solvant, avec la solution contenant les substances, caractérisé en ce qu'il consiste, a utiliser une membrane (2) qui a un pouvoir de rétention pour les substances tel que l'une des substances à analyser passe à travers la membrane (2) et qu'au moins une autre ne passe pas à travers la membrane (2), et à établir et à déterminer d'abord une pression opératoire P$_0$ en utilisant une solution convenable, mise en communication avec la solution de l'osmomètre par la membrane (2), ainsi qu'une solution convenable de l'osmomètre, puis à remplacer suffisamment rapidement la solution, mise en communication avec la solution de l'osmomètre par la membrane (2), par la solution contenant les substances, puis à déterminer la pression minimum P$_{min}$ qui s'établit dans la cellule osmotique (1), ainsi que la pression finale P$_E$ qui s'établit dans la cellule osmotique (1) après la croissance subséquente de la pression, la teneur de la solution à analyser en la substance ou en les substances qui ne passent pas à travers la membrane étant donnée, après étalonnage préalable par des solutions de concentrations prescrites, par la différence P$_0$ -P$_E$ et la teneur de la solution en la substance qui passe à travers la membrane étant donnée par la différence P$_E$ - P$_{min}$.

2. Procédé pour déterminer la teneur en substances dissoutes dans un solvant au moyen d'une cellule osmotique (1) aussi rigide que possible et ayant un dispositif de mesure de la pression (3) destiné à mesurer la pression hydrostatique dans la cellule osmotique (1), la solution de l'osmomètre se trouvant dans la cellule osmotique (1) étant mise en communication, par l'intermédiaire d'une membrane (2) ayant une conductibilité aussi grande que possible pour le solvant, avec la solution contenant les substances, caractérisé en ce qu'il consiste à utiliser une membrane (2) qui a un pouvoir de rétention pour les substances tel que l'une des substances à analyser passe à travers la membrane (2) et qu'au moins une autre ne passe pas à travers la membrane (2), et à établir et à déterminer d'abord une pression opératoire $P_0$ en utilisant une solution convenable mise en communication avec la solution de l'osmomètre par la membrane (2), ainsi qu'une solution convenable de l'osmomètre, puis à remplacer suffisamment rapidement la solution, mise en communication avec la solution de l'osmomètre par la membrane (2), par la solution contenant les substances, puis à déterminer la pression minimum $P_{min}$ s'établissant dans la cellule osmotique (1), la durée $t_{min}$ après laquelle s'établit la pression minimale $P_{min}$, après échange des deux solutions, la constante de vitesse $k_s$ pour la croissance exponentielle de pression se produisant après la pression minimum, et la pression finale $P_E$ s'établissant après la croissance de la pression, la teneur $c°_s$ en la substance s qui traverse la membrane étant donnée par la relation

$$P_E - P_{min} = \sigma_s \cdot RT \cdot C°_s \cdot \exp(-k_s \cdot t_{min}) \tag{!}$$

avec

$R$   = 8,31434 J/°K mole,
$T$   = température absolue
et $\sigma_s$   = coefficient de réflexion de s et la teneur $C°_{imp}$ en la substance ou en les substances qui ne traversent pas la membrane étant donnée par la relation

$$P_0 - P_E = RT \cdot C°_{imp}.$$

3. Procédé suivant la revendication 2, *caractérisé en* ce qu'il consiste, dans le cas où les variations du volume de la cellule osmotique (1), se produisant lorsque l'on effectue la détermination, ne sont pas négligeables, à déterminer le module d'élasticité volumique de la cellule osmotique ($\varepsilon = V$) au moyen d'un dispositif approprié à cet effet, la teneur $C°_s$ en la substance qui passe à travers la membrane étant donnée par la relation,

$$P_E - P_{min} = \frac{\varepsilon}{\varepsilon \cdot RT \cdot C^i_{imp.}} \cdot \sigma_s \cdot RT \cdot C°_s \cdot \exp(-k_s \cdot t_{min}) \tag{3}$$

avec $C^i_{imp}$ = concentration de la solution de l'osmomètre et la teneur $C°_{imp}$ en la substance qui ne passe pas à travers la membrane étant donnée par la relation

$$P_O - P_E = \frac{\varepsilon}{\varepsilon + RT \cdot C^i_{imp}} RT \cdot C°_{imp}$$

4. Procédé suivant l'une des revendications 1 à 3, *caractérisé en* ce qu'il consiste, à déterminer la constante de vitesse $k_s$ pour la croissance exponentielle de la pression se produisant après la pression minimum et la variation, en fonction du temps ($d^2P/dt^2$) de la pente au minimum de pression, et à calculer la pression finale $P_E$ par la relation

$$k_s \cdot k_W = \frac{1}{P_E - P_{min}} \left( \frac{d^2p}{dt^2 \, min} \right)$$

la constante de vitesse pour la variation de pression jusqu'au minimum ayant été déterminée au préalable pour la cellule osmotique (1) utilisée.

$L_p$ étant la conductibilité hydraulique de la membrane,
$\varepsilon$ étant le module d'élasticité volumique de la cellule osmotique,
$R$ 8,31434 J/°K mole,
$T$ étant la température absolue,
$\sigma_1$ étant le coefficient de réflexion de la substance 1,
$C_1$ étant la teneur en la substance 1,
$\sigma_2$ étant le coefficient de réflexion de la substance 2, et
$C_2$ étant la teneur en la substance 2, et, parallèlement à la détermination du résultat $X_1$ ou bien à effectuer, par le procédé décrit, une autre mesure au moyen d'une seconde cellule osmotique dont la membrane a un pouvoir différent de rétention des substances, en déterminant un autre résultat

$$X_2 = \sigma'_1 C_1 + \sigma'_2 C_2$$

et, ensuite, à calculer au moyen des deux résultats $X_1$ et $X_2$ qui ont été déterminés, la teneur en les deux substances, ou bien à effectuer l'autre mesure au moyen de la seconde cellule osmotique, suivant l'un des procédés conformes à la revendication 1 ou à la revendication 2, en utilisant une membrane ayant un pouvoir de rétention pour les substances qui est tel que l'une des substances passe à travers la membrane utilisée et l'autre substance n'y passe pas, avec la possibilité de se contenter de déterminer seulement la teneur en la substance qui passe à travers la membrane où celle en la substance qui n'y passe pas, et à calculer les teneurs en les deux substances en utilisant le résultat $X_1$.

7. Procédé suivant la revendication 6, *caractérisé* en ce qu'il consiste, à déterminer par étalonnage la grandeur constante

$$K = \frac{A_0}{V_0} \cdot Lp \cdot \varepsilon \cdot R \cdot T$$

pour une cellule osmotique donnée à l'avance.

8. Tête de mesure pour un dispositif destiné à la mise en oeuvre du procédé suivant l'une des revendications 1 à 7, constituée d'une cellule osmotique (1) à membrane rigide (2) et à paroi rigide en métal ou en matière plastique, et ayant un dispositif de mesure de la pression (3) destiné à mesurer la pression hydrostatique dans la cellule osmotique (1), la paroi et la membrane (2) délimitant vers l'extérieur la cellule osmotique, et la membrane (2) ayant un module d'élasticité aussi grand que possible et une conductibilité pour le solvant aussi grande que possible, caractérisée en ce que, la membrane (2) a un pouvoir de rétention des substances se trouvant dans la solution à analyser, qui est tel que l'une des substances à analyser passe à travers la membrane et que l'une au moins d'entre elles n'y passe pas, et en ce que le rapport du volume de la cellule osmotique (1) à la surface efficace de la membrane (2) est au plus égal à 0,2 mm.

9. Tête de mesure pour un dispositif destiné à la mise en oeuvre du procédé suivant l'une des revendications 1 à 7, la tête de mesure étant constituée d'une cellule osmotique (1) à paroi rigide en métal ou en matière plastique, comprenant une paroi rigide (2) ayant une conductibilité aussi grande que possible pour le solvant et un module d'élasticité aussi grand que possible, et un dispositif de mesure de la pression (3) destiné à mesurer la pression hydrostatique dans la cellule osmotique (1), et d'une cuve (8a) qui communique avec la cellule osmotique (1) de façon que l'intérieur de la cuve soit adjacent à la membrane (2) de la cellule osmotique (1), caractérisée en ce que, la membrane (2) a un pouvoir de rétention des substances se trouvant dans la solution à analyser, qui est tel que l'une des substances à analyser passe à travers la membrane et que l'une au moins d'entre elles n'y passe pas, et en ce que le rapport du volume de la cellule osmotique (1) à la surface efficace de la membrane (2) est au plus égal à 0,2 mm et en ce que la cuve (8a) est munie de conduits d'amenée et d'évacuation de la solution pour régler la pression opératoire $P_0$ pour la solution à analyser ainsi que, le cas échéant, pour une solution d'étalonnage, les conduits d'amenée et d'évacuation de la cuve (8a), ainsi que l'intérieur de la cuve étant constitués de façon que les solutions qui y sont emmagasinées peuvent être remplacées le plus rapidement possible.

10. Tête de mesure suivant l'une des revendications 8 ou 9, *caractérisée en* ce que, la membrane (2) est une membrane d'hyperfiltration.

11. Tête de mesure suivant l'une des revendications 8 à 10, *caractérisée en* ce que, la membrane (2) est une membrane en fibres creuses.

12. Tête de mesure suivant l'une des revendications 8 à 10, *caractérisée en* ce que, la cellule osmotique (1) comporte un conduit d'amenée et un conduit d'évacuation de la solution de l'osmomètre.

13. Tête de mesure suivant l'une des revendications 8 à 12, *caractérisée en* ce que, le rapport du volume de la cellule osmotique (1) à la surface efficace de la membrane (2) est aussi petit que possible.

14. Tête de mesure suivant l'une des revendications 8 à 13, *caractérisée en* ce que la cellule osmotique (1) est munie d'un dispositif de brassage.

15. Tête de mesure suivant l'une des revendications 8 à 14, *caractérisée en* ce que la membrane (2) est renforcée par une grille métallique.

16. Tête de mesure suivant l'une des revendications 8 à 15, *caractérisée en* ce qu'il est prévu un dispositif pour contrôler les variations de volume de la cellule osmotique (1).

17. Tête de mesure suivant l'une des revendications 8 à 16, *caractérisée en* ce que le dispositif de mesure de la pression (3) envoie des signaux électriques de sortie qui représentent une mesure de la teneur en les substances de la solution à analyser.

18. Dispositif pour déterminer la teneur en substances dissoutes dans un solvant, comprenant une ou deux têtes de mesure suivant la revendication 8, et conformées suivant l'une des revendications 10 à 17, *caractérisé en* ce qu'il est prévu une cuve (8) dans ou sur laquelle sont fixées la ou les têtes de mesure, la membrane (2) étant adjacente à l'intérieur de la cuve et celle-ci pouvant être alimentée au choix en une solution destinée à régler la pression opératoire $P_0$ en la solution à analyser et, le cas échéant, en des solutions d'étalonnage.

19. Dispositif pour déterminer la teneur en des substances dissoutes dans un solvant, ayant une ou deux têtes de mesure suivant la revendication 9 et conformées suivant l'une des revendications 10 à 17, *caractérisé en* ce qu'avec le conduit d'amenée pour la cuve de la ou des têtes de mesure, communiquent un réservoir (9) Pour la solution destinée à régler la pression opératoire $P_0$ et, le cas échéant, pour la cellule osmotique, un réservoir (11) pour la solution de l'osmomètre, et en ce qu'en outre il est prévu un réservoir ou un conduit (7) contenant la solution à analyser et communiquant avec le conduit d'arrivée dans la cuve de la ou des têtes de mesure.

20. Dispositif suivant l'une des revendications 18 ou 19, *caractérisé en* ce qu'il est prévu un appareil de commande destiné à commander le fonctionnement automatique du dispositif, la solution destinée à régler la pression opératoire $P_0$ et la solution à analyser étant chargée alternativement dans la cuve de la tête de mesure à des intervalles de temps prescrits.

21. Dispositif suivant la revendication 1, utilisant une tête de mesure suivant la revendication 17, *caractérisé en* ce qu'il est prévu un autre dispositif de commande et/ou de surveillance qui reçoit les signaux électriques de sortie de la ou des têtes de mesure et qui sert à commander et/ou à surveiller des processus qui sont en liaison fonctionnelle avec la teneur de la substance à analyser.

22. Utilisation d'une cellule d'algue comme cellule osmotique pour la mise en oeuvre du procédé suivant l'une des revendications 1 à 7, la pression hydrostatique régnant dans la cellule étant mesurée au moyen d'une sonde de mesure de pression introduite dans la cellule.

23. Utilisation d'une cellule d'algue suivant la revendication 20, *caractérisée en* ce que la cellule d'algue est une cellule internodiale de Characeen.

FIG. 1

FIG. 2

FIG. 3

FIG. 4

FIG. 5

EP 0 183 072 B1

$P_E - P_{min} = f(C_s^o)$

$C_{imp}^o = 10 \text{ mOsmol Saccharose}$

$(P_E - P_{min})$ [bar]

1,0

0,5

0

0   100   200

$C_s^o$ [mOsmol]

Ⓐ

$P_0 - P_E = g(C_{imp}^o)$

$(P_0 - P_E)$ [bar]

0,6

0,5

0,4

0,3

0,2

0,1

0

10   20

$C_{imp}^o$ [mOsmol]

Ⓑ

EP 0 183 072 B1

FIG. 6

FIG. 7

FIG. 8

EP 0 183 072 B1